(19) Europäisches Patentamt / European Patent Office / Office européen des brevets

(11) **EP 4 187 938 A1**

(12) **EUROPEAN PATENT APPLICATION**
published in accordance with Art. 153(4) EPC

(43) Date of publication:
**31.05.2023  Bulletin 2023/22**

(21) Application number: **20947843.7**

(22) Date of filing: **04.08.2020**

(51) International Patent Classification (IPC):
*H04W 4/06* (2009.01)

(52) Cooperative Patent Classification (CPC):
**H04W 4/06**

(86) International application number:
**PCT/CN2020/106872**

(87) International publication number:
**WO 2022/027247 (10.02.2022 Gazette 2022/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **YU, Haifeng**
  **Shenzhen, Guangdong 518129 (CN)**
• **LI, Bingzhao**
  **Shenzhen, Guangdong 518129 (CN)**

(74) Representative: **Maiwald GmbH
Engineering
Elisenhof
Elisenstrasse 3
80335 München (DE)**

(54) **COMMUNICATION METHOD AND COMMUNICATION APPARATUS**

(57)    This application provides a communication method and apparatus. The method includes: receiving first indication information, where the first indication information is used to request a multicast broadcast service capability; determining first capability information based on the first indication information, where the first capability information includes the multicast broadcast service capability, the multicast broadcast service capability is a capability of further receiving a multicast broadcast service while performing a unicast operation; and sending the first capability information. According to this solution, a terminal device reports the multicast/broadcast service capability according to an indication of a network device, so that unnecessary capability information reporting of the terminal device can be effectively reduced, and flexibility of control by the network device is also improved. The network device may adjust a unicast operation based on the multicast broadcast service capability reported by the terminal device, so that the terminal device can further receive the multicast broadcast service while performing the unicast operation, and this does not exceed a capability limitation of the terminal device.

FIG. 3

Description

**TECHNICAL FIELD**

This application relates to the field of communication technologies, and in particular, to a communication method and a communication apparatus.

**BACKGROUND**

In a communication system, unicast is a manner in which a single transmitter and a single receiver communicate with each other by using a network. A multimedia broadcast multicast service (Multimedia Broadcast Multicast Service, MBMS) is a service oriented to a plurality of terminal devices, and is a point-to-multipoint service used to simultaneously transmit a data service of a specific type of content from a data service source to a plurality of users in a specific range. A relatively small quantity of network resources are used to simultaneously provide services for a large quantity of users with a same requirement, so that network resource occupation is reduced. The multimedia broadcast multicast service is, for example, live broadcasting or a regularly played program. In one case, a terminal device needs to be able to receive a multicast broadcast service while performing a unicast operation. However, there is no solution that enables the terminal device to simultaneously perform the unicast operation and receive the multicast broadcast service.

**SUMMARY**

Embodiments of this application provide a communication method and a communication apparatus, to support the communication apparatus in further receiving a broadcast multicast service while performing a unicast operation.

According to a first aspect, a communication method is provided, and includes: receiving first indication information, where the first indication information is used to request a multicast broadcast service capability; determining first capability information based on the first indication information, where the first capability information includes the multicast broadcast service capability; and sending the first capability information when the multicast broadcast service capability is a capability of further receiving a multicast broadcast service while performing a unicast operation.

That a terminal device performs the unicast operation means that the terminal device can perform receiving and/or sending in a unicast manner. Alternatively, performing the unicast operation may be understood as performing communication between the terminal device and a network device in a unicast manner. The terminal device can further receive the multicast broadcast service while performing the unicast operation.

The multicast broadcast service capability is a capability that the terminal device further receives the multicast broadcast service while performing the unicast operation. In other words, the multicast broadcast service capability is a capability that the terminal device receives the multicast broadcast service and performs unicast simultaneously. A unicast service and the multicast broadcast service may share a baseband capability of the terminal device.

In this embodiment of this application, the terminal device reports the multicast broadcast service capability according to an indication of the network device, to avoid unnecessary capability information reporting of the terminal device. The network device may configure a unicast resource based on the multicast broadcast service capability reported by the terminal device, so that the terminal device can further receive the multicast broadcast service while performing the unicast operation, and this does not exceed the baseband capability of the terminal device.

In a possible implementation of the first aspect, the multicast broadcast service capability may be a capability of further receiving the multicast broadcast service from a second network device while performing the unicast operation with a first network device. The first network device and the second network device may respectively use an NR access technology and an LTE access technology; both the first network device and the second network device may use the NR access technology; or both the first network device and the second network device use the LTE access technology. In this embodiment of this application, the first network device and the second network device may be separately network devices in communication systems of different access technologies, to provide compatibility for communication between different systems.

In another possible implementation of the first aspect, the multicast broadcast service capability may be a capability of further receiving the multicast broadcast service from the second network device in a ROM manner while performing the unicast operation with the first network device. Therefore, this embodiment of this application is applicable to further receiving the multicast broadcast service from the second network device in the ROM manner while performing the unicast operation with the first network device.

In a possible implementation of the first aspect, the terminal device may further receive capability query information. The capability query information is used to request a capability of the terminal device, and the capability query information includes the first indication information. The capability query information may include a first information element, the first information element is used to request a filtered capability of the terminal device, and the first information element may include the first indication information.

In this embodiment of this application, the first indication information is set in the capability query information, so that the multicast broadcast service capability may be requested in a process of querying the capability of the terminal device, and signaling overheads are reduced.

In still another possible implementation of the first aspect, the multicast broadcast service capability may be requested jointly by using the first indication information and the capability query information, and the terminal device determines the multicast broadcast service capability based on the first indication information and the capability query information.

In this embodiment of this application, the multicast broadcast service capability is requested jointly by using the first indication information and the capability query information, and a type of the multicast broadcast service capability may be indicated based on an existing field in the capability query information, so that a request for the multicast broadcast service capability is clearer, and an unrequested multicast broadcast service capability may be not reported. In this way, unnecessary information reporting can be avoided.

In still another possible implementation of the first aspect, when the capability query information includes a first field, the multicast broadcast service capability is determined based on the first indication information and the first field, and the multicast broadcast service capability corresponds to an NE-DC band combination;

> when the capability query information includes a second field, the multicast broadcast service capability is determined based on the first indication information and the second field, and the multicast broadcast service capability corresponds to an NR-DC band combination; and
> when the capability query information includes a third field, the multicast broadcast service capability is determined based on the first indication information and the third field, the multicast broadcast service capability corresponds to an EN-DC band combination, and a band combination that is in the EN-DC band combination and that is not related to the multicast broadcast service is omitted.

In still another possible implementation of the first aspect, the first field, the second field, and the third field are separately used to request different types of capabilities of the terminal device. In a process of reporting the capability of the terminal device, the terminal device reports, based on the first field, a feature set combination applicable to NE-DC, reports, based on the second field, a feature set combination applicable to NR-DC, and omits, based on the third field, reporting of a band combination and a feature set combination that are applicable only to EN-DC.

In this embodiment of this application, the terminal device may determine different types of multicast broadcast service capabilities based on the first indication information and an existing field in the capability query information, to avoid unnecessary capability information reporting.

In still another possible implementation of the first aspect, the terminal device may determine a type of the multicast broadcast service capability based on the first indication information.

When the first indication information includes a fourth field, the multicast broadcast service capability is determined based on the fourth field, the multicast broadcast service capability corresponds to a band combination, and the band combination is related to the multicast broadcast service.

When the first indication information includes a fifth field, the multicast broadcast service capability is determined based on the fifth field, and the multicast broadcast service capability corresponds to an EN-DC band combination.

When the first indication information includes a sixth field, the multicast broadcast service capability is determined based on the sixth field, and the multicast broadcast service capability corresponds to an NE-DC band combination.

When the first indication information includes a seventh field, the multicast broadcast service capability is determined based on the seventh field, and the multicast broadcast service capability corresponds to an NR-DC band combination.

In this embodiment of this application, the terminal device may determine different types of multicast broadcast service capabilities based on the first indication information, and the terminal device can determine a corresponding type of multicast broadcast service capability by setting different fields in the first indication information, and send the multicast broadcast service capability to the network device, to avoid unnecessary capability information reporting.

In still another possible implementation of the first aspect, the multicast broadcast service capability includes at least one of the following information:

> information indicating whether further receiving the multicast broadcast service while performing the unicast operation is supported;
> maximum bandwidth supported for receiving the multicast broadcast service;
> a scaling factor of the multicast broadcast service, where the scaling factor is a ratio factor of one bandwidth unit for processing a first subcarrier spacing to one bandwidth unit for processing a default subcarrier spacing, and the first subcarrier spacing corresponds to the multicast broadcast service;

information indicating whether receiving of the multicast broadcast service at a frequency of a secondary cell is supported; and

information indicating whether receiving of the multicast broadcast service at a frequency of a serving cell is supported, where the serving cell is in a master cell group or a secondary cell group.

In still another possible implementation of the first aspect, the multicast broadcast service capability corresponds to the band combination, and the band combination includes at least one of the following: the EN-DC band combination, the NE-DC band combination, the NR-DC band combination, an MR-DC band combination, or a CA band combination.

The foregoing band combinations may be referred to as different types of band combinations. One type of band combination such as the EN-DC band combination may include a plurality of band combinations. Some of the plurality of band combinations may be related to the multicast broadcast service, and each band combination may also correspond to a different multicast broadcast service capability.

In still another possible implementation of the first aspect, the first capability information sent by the terminal device may further include band combination information, and the band combination information indicates a band combination in which the multicast broadcast service is further received while the unicast operation is performed.

In still another possible implementation of the first aspect, the band combination information includes at least one of the following: a quantity of band combinations, a carrier component included in the band combination, or a feature set combination corresponding to the band combination. Alternatively, the band combination information includes second indication information, and the second indication information indicates that the multicast broadcast service capability is sent in a first sequence.

In this embodiment of this application, a correspondence between the band combination and the multicast broadcast service capability may be indicated by using the second indication information, to avoid repeated reporting of the band combination.

In still another possible implementation of the first aspect, the first capability information sent by the terminal device may further include the first indication information. A function of sending the first indication information by the terminal device is to notify the first network device that an indication for requesting the multicast broadcast service capability is received, and in this case, the multicast broadcast service capability included in the first capability information sent by the terminal device is the multicast broadcast service capability requested by the first network device by using the first indication information. This is equivalent to that the first indication information plays an identification role in the first capability information.

According to a second aspect, a communication method is provided, and includes: A first network device sends first indication information, where the first indication information is used to request a multicast broadcast service capability, and the multicast broadcast service capability means that a terminal device further receives a multicast broadcast service while performing a unicast operation; and receives first capability information, where the first capability information includes the multicast broadcast service capability.

In this embodiment of this application, the first network device may indicate the requested multicast broadcast service capability to the terminal device, and the terminal device sends the first capability information according to a first indication, to avoid unnecessary capability information reporting. The first network device may configure a unicast resource based on the multicast broadcast service capability reported by the terminal device, so that the terminal device can further receive the multicast broadcast service while performing the unicast operation, and this does not exceed a baseband capability of the terminal device.

That the terminal device performs the unicast operation means that the terminal device can send and receive data or perform communication in a unicast manner. Alternatively, performing the unicast operation may be understood as performing unicast communication between the terminal device and the network device. The terminal device can further receive the multicast broadcast service while performing the unicast operation.

The multicast broadcast service capability is a capability that the terminal device further receives the multicast broadcast service while performing the unicast operation. In other words, the multicast broadcast service capability is a capability that the terminal device receives the multicast broadcast service and performs unicast simultaneously. A unicast service and the multicast broadcast service may share the baseband capability of the terminal device.

In this embodiment of this application, the first network device indicates the terminal device to report the multicast broadcast service capability, and the first network device may configure a unicast resource based on the multicast broadcast service capability reported by the terminal device.

In a possible implementation of the second aspect, the multicast broadcast service capability may be a capability of further receiving the multicast broadcast service from a second network device while performing the unicast operation with the first network device. The first network device and the second network device may be respectively a network device in an NR system and a network device in an LTE system; both the first network device and the second network device may be network devices in the NR system; or both the first network device and the second network device are network devices in the LTE system.

In this embodiment of this application, the first network device and the second network device may be network devices in different communication systems, to provide compatibility for communication between different systems.

In a possible implementation of the second aspect, the multicast broadcast service capability may be a capability of further receiving the multicast broadcast service from the second network device in a ROM manner while performing the unicast operation with the first network device. Therefore, this embodiment of this application is applicable to further receiving the multicast broadcast service from the second network device in the ROM manner while performing the unicast operation with the first network device.

In a possible implementation of the second aspect, the first network device may further send capability query information. The capability query information is used to request a capability of the terminal device, and the capability query information includes the first indication information. The capability query information includes a first information element, the first information element is used to request a filtered capability of the terminal device, and the first information element includes the first indication information.

In this embodiment of this application, the first indication information is set in the capability query information, so that the multicast broadcast service capability may be requested in a process of querying the capability of the terminal device, and signaling overheads are reduced.

In still another possible implementation of the second aspect, the first network device may request the multicast broadcast service capability jointly by using the first indication information and the capability query information, and the terminal device determines the multicast broadcast service capability based on the first indication information and the capability query information.

In this embodiment of this application, the multicast broadcast service capability is requested jointly by using the first indication information and the capability query information, and a type of the multicast broadcast service capability may be indicated based on an existing field in the capability query information, so that a request for the multicast broadcast service capability is clearer, and an unrequested multicast broadcast service capability may be not reported. In this way, unnecessary information reporting can be avoided.

In still another possible implementation of the second aspect, when the capability query information includes a first field, the first indication information and the first field are used to request a multicast broadcast service capability corresponding to an NE-DC band combination;

when the capability query information includes a second field, the first indication information and the second field are used to request a multicast broadcast service capability corresponding to an NR-DC band combination; and when the capability query information includes a third field, the first indication information and the third field are used to request a multicast broadcast service capability corresponding to an EN-DC band combination, and the first indication information and the third field indicate to omit a band combination that is in the EN-DC band combination and that is not related to the multicast broadcast service.

In still another possible implementation of the second aspect, the first field, the second field, and the third field are separately used to request different types of capabilities of the terminal device. In a process of querying the capability of the terminal device, the first field is used to request to report a feature set combination applicable to NE-DC, the second field is used to request a feature set combination applicable to NR-DC, and the third field indicates the terminal device to omit reporting of a band combination and a feature set combination that are applicable only to EN-DC.

In this embodiment of this application, the first network device may request different types of multicast broadcast service capabilities based on the first indication information and an existing field in the capability query information, to avoid increasing processing complexity of the network device because the terminal device reports unnecessary capability information.

In still another possible implementation of the second aspect, the first network device may indicate, by using the first indication information, a type of the multicast broadcast service capability to be requested.

When the first indication information includes a fourth field, the fourth field is used to request a multicast broadcast service capability corresponding to a band combination related to the multicast broadcast service;

when the first indication information includes a fifth field, the fifth field is used to request a multicast broadcast service capability corresponding to an EN-DC band combination; when the first indication information includes a sixth field, the sixth field is used to request a multicast broadcast service capability corresponding to an NE-DC band combination; or when the first indication information includes a seventh field, the seventh field is used to request a multicast broadcast service capability corresponding to an NR-DC band combination.

In this embodiment of this application, the first network device may indicate the type of the requested multicast broadcast service capability by using the first indication information, to avoid unnecessary capability information reporting.

In still another possible implementation of the second aspect, the multicast broadcast service capability in this embodiment of this application includes at least one of the following information:

> information indicating whether further receiving the multicast broadcast service while performing the unicast operation is supported;
> maximum bandwidth supported for receiving the multicast broadcast service;
> a scaling factor of the multicast broadcast service, where the scaling factor is a ratio factor of one bandwidth unit for processing a first subcarrier spacing to one bandwidth unit for processing a default subcarrier spacing, and the first subcarrier spacing corresponds to the multicast broadcast service;
> information indicating whether receiving of the multicast broadcast service at a frequency of a secondary cell is supported; and
> information indicating whether receiving of the multicast broadcast service at a frequency of a serving cell is supported, where the serving cell is in a master cell group or a secondary cell group.

In still another possible implementation of the second aspect, the multicast broadcast service capability corresponds to the band combination, and the band combination includes at least one of the following: the EN-DC band combination, the NE-DC band combination, the NR-DC band combination, an MR-DC band combination, or a CA band combination.

The foregoing band combinations may be referred to as different types of band combinations. One type of band combination such as the EN-DC band combination may include a plurality of band combinations. Some of the plurality of band combinations may be related to the multicast broadcast service, and each band combination may also correspond to a different multicast broadcast service capability.

In still another possible implementation of the second aspect, the first capability information received by the first network device may further include band combination information, and the band combination information indicates a band combination in which the multicast broadcast service is further received while the unicast operation is performed.

In still another possible implementation of the second aspect, the band combination information includes at least one of the following: a quantity of band combinations, a carrier component included in the band combination, or a feature set combination corresponding to the band combination. Alternatively, the band combination information includes second indication information, and the second indication information indicates that the multicast broadcast service capability is sent in a first sequence.

In this embodiment of this application, a correspondence between the band combination information and the multicast broadcast service capability may be indicated by using the second indication information, to avoid repeated reporting of the band combination information.

In still another possible implementation of the second aspect, the first capability information received by the first network device may further include the first indication information. A function of the first indication information is to notify the first network device that an indication for requesting the multicast broadcast service capability is received, and in this case, the multicast broadcast service capability included in the first capability information sent by the terminal device is a multicast broadcast service capability requested by the first network device by using the first indication information. This is equivalent to that the first indication information plays an identification role in the first capability information.

According to a third aspect, a communication apparatus is provided, and includes: a transceiver module, configured to receive first indication information, where the first indication information is used to request a multicast broadcast service capability; and a processing module, configured to determine first capability information based on the first indication information, where the first capability information includes the multicast broadcast service capability. The multicast broadcast service capability is a capability of further receiving a multicast broadcast service while performing a unicast operation. The transceiver module is further configured to send the first capability information.

The communication apparatus in this embodiment of this application may be a terminal device. Performing the unicast operation means that the terminal device can receive and send unicast service. Alternatively, performing the unicast operation may be understood as performing unicast communication between the terminal device and a network device. The terminal device can further receive the multicast broadcast service while performing the unicast operation.

The multicast broadcast service capability is a capability that the terminal device further receives the multicast broadcast service while performing the unicast operation. In other words, the multicast broadcast service capability is a capability that the terminal device receives the multicast broadcast service and performs unicast simultaneously. A unicast service and the multicast broadcast service may share a baseband capability of the terminal device.

In this embodiment of this application, the terminal device reports the multicast broadcast service capability according to an indication of the network device, to avoid unnecessary capability information reporting of the terminal device. The network device may configure a unicast resource based on the multicast broadcast service capability reported by the terminal device, so that the terminal device can further receive the multicast broadcast service while performing the unicast operation, and this does not exceed the baseband capability of the terminal device.

In still another possible implementation of the third aspect, the multicast broadcast service capability may be a capability of further receiving the multicast broadcast service from a second network device while performing the unicast operation with a first network device. The first network device and the second network device may be respectively a network device in an NR system and a network device in an LTE system; both the first network device and the second network device may be network devices in the NR system; or both the first network device and the second network device are network devices in the LTE system.

In this embodiment of this application, the first network device and the second network device may be network devices in different communication systems, so that the communication apparatus may simultaneously communicate with network devices in different systems.

In still another possible implementation of the third aspect, the multicast broadcast service capability may be a capability of further receiving the multicast broadcast service from the second network device in a ROM manner while performing the unicast operation with the first network device. Therefore, the communication apparatus provided in this embodiment of this application is applicable to further receiving the multicast broadcast service from the second network device in the ROM manner while performing the unicast operation with the first network device.

In still another possible implementation of the third aspect, the transceiver module may be further configured to receive capability query information. The capability query information is used to request a capability of the terminal device, and the capability query information includes the first indication information. The capability query information includes a first information element, the first information element is used to request a filtered capability of the terminal device, and the first information element includes the first indication information.

In this embodiment of this application, the first indication information is set in the capability query information, so that the multicast broadcast service capability may be requested in a process of querying the capability of the terminal device, and signaling overheads are reduced. In still another possible implementation of the third aspect, the first indication information and the capability query information may be used to jointly request the multicast broadcast service capability. The processing module of the communication apparatus is configured to determine the multicast broadcast service capability based on the first indication information and the capability query information.

The communication apparatus provided in this embodiment of this application may request the multicast broadcast service capability jointly by using the first indication information and the capability query information, and indicate a type of the multicast broadcast service capability based on an existing field in the capability query information, so that a request for the multicast broadcast service capability is clearer, and an unrequested multicast broadcast service capability may be not reported. In this way, unnecessary information reporting can be avoided.

In still another possible implementation of the third aspect, when the capability query information includes a first field, the processing module of the communication apparatus is configured to determine the multicast broadcast service capability based on the first indication information and the first field, and the multicast broadcast service capability corresponds to an NE-DC band combination;

when the capability query information includes a second field, the processing module of the communication apparatus is configured to determine the multicast broadcast service capability based on the first indication information and the second field, and the multicast broadcast service capability corresponds to an NR-DC band combination; and when the capability query information includes a third field, the processing module of the communication apparatus is configured to: determine the multicast broadcast service capability based on the first indication information and the third field, where the multicast broadcast service capability corresponds to an EN-DC band combination; and omit a band combination that is in the EN-DC band combination and that is not related to the multicast broadcast service.

In still another possible implementation of the third aspect, the first field, the second field, and the third field are separately used to request different types of capabilities of the terminal device. In a process of reporting the capability of the terminal device, the terminal device reports, based on the first field, a feature set combination applicable to NE-DC, reports, based on the second field, a feature set combination applicable to NR-DC, and omits, based on the third field, reporting of a band combination and a feature set combination that are applicable only to EN-DC.

In this embodiment of this application, the processing module of the terminal device may be configured to determine different types of multicast broadcast service capabilities based on the first indication information and an existing field in the capability query information, to avoid unnecessary capability information reporting.

In still another possible implementation of the third aspect, the processing module of the terminal device may be configured to determine a type of the multicast broadcast service capability based on the first indication information.

When the first indication information includes a fourth field, the processing module of the terminal device may be configured to determine the multicast broadcast service capability based on the fourth field, the multicast broadcast service capability corresponds to a band combination, and the band combination is related to the multicast broadcast service.

When the first indication information includes a fifth field, the processing module of the terminal device may be configured to determine the multicast broadcast service capability based on the fifth field, and the multicast broadcast service capability corresponds to an EN-DC band combination.

When the first indication information includes a sixth field, the processing module of the terminal device may be configured to determine the multicast broadcast service capability based on the sixth field, and the multicast broadcast service capability corresponds to an NE-DC band combination.

When the first indication information includes a seventh field, the processing module of the terminal device may be configured to determine the multicast broadcast service capability based on the seventh field, and the multicast broadcast service capability corresponds to an NR-DC band combination.

In this embodiment of this application, the processing module of the terminal device may be configured to determine different types of multicast broadcast service capabilities based on the first indication information, and the terminal device can determine a corresponding type of multicast broadcast service capability by setting different fields in the first indication information, and send the multicast broadcast service capability to the network device, to avoid unnecessary capability information reporting.

In still another possible implementation of the third aspect, the multicast broadcast service capability includes at least one of the following information:

information indicating whether further receiving the multicast broadcast service while performing the unicast operation is supported;
maximum bandwidth supported for receiving the multicast broadcast service;
a scaling factor of the multicast broadcast service, where the scaling factor is a ratio factor of one bandwidth unit for processing a first subcarrier spacing to one bandwidth unit for processing a default subcarrier spacing, and the first subcarrier spacing corresponds to the multicast broadcast service;
information indicating whether receiving of the multicast broadcast service at a frequency of a secondary cell is supported; and
information indicating whether receiving of the multicast broadcast service at a frequency of a serving cell is supported, where the serving cell is in a master cell group or a secondary cell group.

In still another possible implementation of the third aspect, the multicast broadcast service capability corresponds to the band combination, and the band combination includes the EN-DC band combination, the NE-DC band combination, the NR-DC band combination, an MR-DC band combination, or a CA band combination.

The foregoing band combinations may be referred to as different types of band combinations. One type of band combination such as the EN-DC band combination may include a plurality of band combinations. Some of the plurality of band combinations may be related to the multicast broadcast service, and each band combination may also correspond to a different multicast broadcast service capability.

The first capability information sent by the transceiver module of the terminal device may further include band combination information, and the band combination information indicates a band combination in which the multicast broadcast service is further received while the unicast operation is performed.

In still another possible implementation of the third aspect, the band combination information includes at least one of the following: a quantity of band combinations, a carrier component included in the band combination, or a feature set combination corresponding to the band combination. Alternatively, the band combination information includes second indication information, and the second indication information indicates that the multicast broadcast service capability is sent in a first sequence.

A correspondence between the band combination information and the multicast broadcast service capability may be indicated by using the second indication information, to avoid repeated reporting of the band combination information.

In still another possible implementation of the third aspect, the first capability information sent by the transceiver module of the communication apparatus may further include the first indication information. A function of the first indication information is to notify the first network device that an indication for requesting the multicast broadcast service capability is received, and in this case, the multicast broadcast service capability included in the first capability information sent by the terminal device is a multicast broadcast service capability requested by the first network device by using the first indication information. This is equivalent to that the first indication information plays an identification role in the first capability information.

According to a fourth aspect, a communication apparatus is provided, and includes: a processing module, configured to determine first indication information; and a transceiver module, configured to send the first indication information, where the first indication information is used to request a multicast broadcast service capability. The multicast broadcast service capability is a capability that a terminal device further receives a multicast broadcast service while performing a unicast operation. The transceiver module is configured to receive first capability information, and the first capability information includes the multicast broadcast service capability. The communication apparatus in this embodiment of this application may be a first network device.

That the terminal device performs the unicast operation means that the terminal device can send and receive data or perform communication in a unicast manner. Alternatively, performing the unicast operation may be understood as performing unicast communication between the terminal device and a network device. The terminal device can further receive the multicast broadcast service while performing the unicast operation.

The multicast broadcast service capability is a capability that the terminal device further receives the multicast broadcast service while performing the unicast operation. In other words, the multicast broadcast service capability is a capability that the terminal device receives the multicast broadcast service and performs unicast simultaneously. A unicast service and the multicast broadcast service may share a baseband capability of the terminal device.

The network device in this embodiment of this application may be the first network device. The first network device indicates the terminal device to report the multicast broadcast service capability, and the first network device may configure a unicast resource based on the multicast broadcast service capability reported by the terminal device.

In still another possible implementation of the fourth aspect, the multicast broadcast service capability may be a capability of further receiving the multicast broadcast service from a second network device while performing the unicast operation with the first network device. The first network device and the second network device may be respectively a network device in an NR system and a network device in an LTE system; both the first network device and the second network device may be network devices in the NR system; or both the first network device and the second network device are network devices in the LTE system. In this embodiment of this application, the first network device and the second network device may be network devices in different communication systems.

In a possible implementation of the fourth aspect, the multicast broadcast service capability may be a capability of further receiving the multicast broadcast service from the second network device in a ROM manner while performing the unicast operation with the first network device. Therefore, this embodiment of this application is applicable to further receiving the multicast broadcast service from the second network device in the ROM manner while performing the unicast operation with the first network device.

In a possible implementation of the fourth aspect, the transceiver module of the first network device may be further configured to send capability query information. The capability query information is used to request a capability of the terminal device, and the capability query information includes the first indication information. The capability query information includes a first information element, the first information element is used to request a filtered capability of the terminal device, and the first information element includes the first indication information.

In this embodiment of this application, the first indication information is set in the capability query information, so that the multicast broadcast service capability may be requested in a process of querying the capability of the terminal device, and signaling overheads are reduced.

In still another possible implementation of the fourth aspect, the multicast broadcast service capability may be requested jointly by using the first indication information and the capability query information, and the terminal device determines the multicast broadcast service capability based on the first indication information and the capability query information.

In this embodiment of this application, the multicast broadcast service capability is requested jointly by using the first indication information and the capability query information, and a type of the multicast broadcast service capability may be indicated based on an existing field in the capability query information, so that a request for the multicast broadcast service capability is clearer, and an unrequested multicast broadcast service capability may be not reported. In this way, unnecessary information reporting can be avoided.

In still another possible implementation of the fourth aspect, when the capability query information includes a first field, the first indication information and the first field are used to request a multicast broadcast service capability corresponding to an NE-DC band combination;

when the capability query information includes a second field, the first indication information and the second field are used to request a multicast broadcast service capability corresponding to an NR-DC band combination; and

when the capability query information includes a third field, the first indication information and the third field are used to request a multicast broadcast service capability corresponding to an EN-DC band combination, and the first indication information and the third field indicate to omit a band combination that is in the EN-DC band combination and that is not related to the multicast broadcast service.

In still another possible implementation of the fourth aspect, the first field, the second field, and the third field are separately used to request different types of capabilities of the terminal device. In a process of querying the capability of the terminal device, the first field is used to request to report a feature set combination applicable to NE-DC, the second field is used to request a feature set combination applicable to NR-DC, and the third field indicates the terminal device to omit reporting of a band combination and a feature set combination that are applicable only to EN-DC.

In this embodiment of this application, the first network device may request different types of multicast broadcast service capabilities based on the first indication information and an existing field in the capability query information.

In still another possible implementation of the fourth aspect, the first network device may indicate, by using the first indication information, a type of the multicast broadcast service capability to be requested.

The first indication information includes a fourth field, and the fourth field is used to request a multicast broadcast service capability corresponding to a band combination related to the multicast broadcast service;

the first indication information includes a fifth field, and the fifth field is used to request a multicast broadcast service capability corresponding to an EN-DC band combination;
the first indication information includes a sixth field, and the sixth field is used to request a multicast broadcast service capability corresponding to an NE-DC band combination; or
the first indication information includes a seventh field, and the seventh field is used to request a multicast broadcast service capability corresponding to an NR-DC band combination.

In this embodiment of this application, the first network device may indicate the type of the requested multicast broadcast service capability by using the first indication information, to avoid unnecessary capability information reporting.

In still another possible implementation of the fourth aspect, the multicast broadcast service capability includes at least one of the following information:

information indicating whether further receiving the multicast broadcast service while performing the unicast operation is supported;
maximum bandwidth supported for receiving the multicast broadcast service;
a scaling factor of the multicast broadcast service, where the scaling factor is a ratio factor of one bandwidth unit for processing a first subcarrier spacing to one bandwidth unit for processing a default subcarrier spacing, and the first subcarrier spacing corresponds to the multicast broadcast service;
information indicating whether receiving of the multicast broadcast service at a frequency of a secondary cell is supported; and
information indicating whether receiving of the multicast broadcast service at a frequency of a serving cell is supported, where the serving cell is in a master cell group or a secondary cell group.

In still another possible implementation of the fourth aspect, the multicast broadcast service capability corresponds to the band combination. The band combination includes the EN-DC band combination, the NE-DC band combination, the NR-DC band combination, an MR-DC band combination, or a CA band combination.

The foregoing band combinations may be referred to as different types of band combinations. One type of band combination such as the EN-DC band combination may include a plurality of band combinations. Some of the plurality of band combinations may be related to the multicast broadcast service, and each band combination may also correspond to a different multicast broadcast service capability.

The first capability information may further include band combination information, and the band combination information indicates a band combination in which the multicast broadcast service is further received while the unicast operation is performed.

In still another possible implementation of the fourth aspect, the band combination information includes at least one of the following: a quantity of band combinations, a carrier component included in the band combination, or a feature set combination corresponding to the band combination. Alternatively, the band combination information includes second indication information, and the second indication information indicates that the multicast broadcast service capability is sent in a first sequence.

In this embodiment of this application, a correspondence between the band combination information and the multicast broadcast service capability may be indicated by using the second indication information, to avoid repeated reporting of the band combination information.

In still another possible implementation of the fourth aspect, the first capability information may further include the first indication information. A function of the first indication information is to notify the first network device that an indication for requesting the multicast broadcast service capability is received, and in this case, the multicast broadcast service capability included in the first capability information sent by the terminal device is a multicast broadcast service capability requested by the first network device by using the first indication information. This is equivalent to that the first indication information plays an identification role in the first capability information.

According to a fifth aspect, a communication apparatus is provided, and includes a transceiver and a processor. The transceiver is configured to execute instructions for receiving and sending information, and the processor is configured to perform another step. Specifically, the communication apparatus is configured to perform the method in any possible implementation of the first aspect.

According to a sixth aspect, a communication apparatus is provided, and includes a transceiver and a processor. The transceiver is configured to execute instructions for receiving and sending information, and the processor is configured to perform another step. Specifically, the communication apparatus is configured to perform the method in any possible implementation of the second aspect.

According to a seventh aspect, a computer-readable storage medium is provided. A computer program is stored on the computer-readable storage medium, and the program is executed by a processor to implement the method in any possible implementation of the first aspect.

According to an eighth aspect, a computer-readable storage medium is provided. A computer program is stored on the computer-readable storage medium, and the program is executed by a processor to implement the method in any possible implementation of the second aspect.

According to a ninth aspect, a communication apparatus is provided. The communication apparatus includes a memory and a processor, the memory is configured to store instructions, the processor is configured to execute the instructions stored in the memory, and execution of the instructions stored in the memory enables the processor to perform the method in any possible implementation of the first aspect.

According to a tenth aspect, a communication apparatus is provided. The communication apparatus includes a memory and a processor, the memory is configured to store instructions, the processor is configured to execute the instructions stored in the memory, and execution of the instructions stored in the memory enables the processor to perform the method in any possible implementation of the second aspect.

According to an eleventh aspect, a communication system is provided, and includes the communication apparatus described in the third aspect and the communication apparatus described in the fourth aspect.

According to a twelfth aspect, a computer program product including instructions is provided. The computer program product is configured to store a computer program, and when the computer program is run on a computer, the computer is enabled to perform the method in any possible implementation of the first aspect.

According to a thirteenth aspect, a computer program product including instructions is provided. The computer program product is configured to store a computer program, and when the computer program is run on a computer, the computer is enabled to perform the method in any possible implementation of the second aspect.

**BRIEF DESCRIPTION OF DRAWINGS**

FIG. 1 is a schematic diagram of a network architecture to which an embodiment of this application is applicable;
FIG. 2 is a schematic diagram of another network architecture to which an embodiment of this application is applicable;
FIG. 3 is a flowchart of a communication method according to an embodiment of this application;
FIG. 4 is a schematic diagram of an optional application scenario according to an embodiment of this application;
FIG. 5 is a flowchart of a communication method according to a first embodiment of this application;
FIG. 6 is a flowchart of another communication method according to a first embodiment of this application;
FIG. 7 is a flowchart of a communication method according to a second embodiment of this application;
FIG. 8 is a flowchart of a communication method according to a third embodiment of this application;
FIG. 9 is a schematic diagram of a simplified structure of a terminal device;
FIG. 10 is a schematic diagram of another structure of a terminal device according to an embodiment of this application;
FIG. 11 is a schematic diagram of still another structure of a terminal device according to an embodiment of this application; and
FIG. 12 is a schematic diagram of a structure of a network device according to an embodiment of this application.

**DESCRIPTION OF EMBODIMENTS**

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.

(1) A terminal device includes a device that provides voice for a user, a device that provides data connectivity for the user, and a device that provides voice and data connectivity for the user. For example, the terminal device may include a handheld device with a wireless connection function or a processing device connected to a wireless modem. The terminal device may also be referred to as a terminal for short. The terminal may communicate with a core network by using a radio access network (radio access network, RAN), and exchange voice or data with the RAN, or exchange voice and data with the RAN. The terminal may include user equipment (user equipment, UE), a wireless terminal, a mobile terminal, a device-to-device (device-to-device, D2D) terminal, a vehicle-to-everything (vehicle to everything, V2X) terminal, a machine-to-machine/machine-type communications (machine-to-machine/machine-type communications, M2M/MTC) terminal, an internet of things (internet of things, IoT) terminal, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. The terminal may include a mobile phone (or referred to as a "cellular" phone), a computer with a mobile terminal, a portable, pocket-sized, handheld, or computer built-in mobile apparatus, and the like. For example, the terminal may include a device such as a personal communications service (personal communications service, PCS) phone, a cordless telephone set, a session initiation protocol (session initiation protocol, SIP) phone, a wireless local loop (wireless local loop, WLL) station, or a personal digital assistant (personal digital assistant, PDA). The terminal alternatively includes a limited device, for example, a device having low power consumption, a device having a limited storage capability, or a device having a limited computing capability. For example, the terminal may include an information sensing device such as a barcode, a radio frequency identification (radio frequency identification, RFID), a sensor, a global positioning system (global positioning system, GPS), or a laser scanner.

By way of example, and not limitation, in embodiments of this application, the terminal may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is not merely a hardware device, but is used to implement a powerful function through software support, data interaction, and cloud interaction. In a board sense, wearable intelligent devices include full-featured and large-sized devices that can implement complete or partial functions without depending on smartphones, for example, smart watches or smart glasses, and devices that focus on only one type of application function and need to work with other devices such as smartphones, such as various smart bands, smart helmets, or smart jewelry for monitoring physical signs.

If the various terminals described above are located in a vehicle, for example, placed in the vehicle or installed in the vehicle, the terminals may be all considered as vehicle-mounted terminals. For example, the vehicle-mounted terminal is also referred to as an on-board unit (on-board unit, OBU).

In embodiments of this application, an apparatus for implementing a function of the terminal may be the terminal, or may be a circuit that can support the terminal in implementing the function, for example, a circuit that may be used in a chip system, and the chip system may be installed in the terminal. In embodiments of this application, the chip system may include a chip, or may include a chip and another discrete component. In the technical solutions provided in embodiments of this application, the terminal is used as an example of the apparatus for implementing the function of the terminal to describe the technical solutions provided in embodiments of this application. In addition, the terminal device in this application may alternatively be a terminal device in next-generation communication.

(2) A network device may include a radio access network (radio access network, RAN) device, such as a base station (for example, an access point). The network device may be a device that is in an access network and that communicates with the terminal device by using an air interface, or a network device in a vehicle-to-everything (vehicle-to-everything, V2X) technology is a roadside unit (road side unit, RSU). The base station may be configured to mutually convert a received over-the-air frame and an IP packet and serve as a router between the terminal and a rest portion of the access network, where the rest portion of the access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (NodeB, eNB, or e-NodeB, evolved NodeB) in a long term evolution (long term evolution, LTE) system or a long term evolution-advanced (long term evolution-advanced, LTE-A) system, or may include a next-generation NodeB (next-generation NodeB, gNB) in an evolved packet core (evolved packet core, EPC) network, a fifth-generation communication technology (the 5th generation, 5G), or a new radio (new radio, NR) system (which may also be referred to as an NR system for short), or may include a central unit (central unit, CU) and a distributed unit (distributed unit, DU) in a cloud radio access network (cloud radio access network, Cloud RAN) system. This is not limited in embodiments of this application.

The network device may further include a core network device, and the core network device includes, for example, an access and mobility management function (access and mobility management function, AMF).

(3) Multimedia broadcast multicast service (Multimedia Broadcast Multicast Service, MBMS)

The MBMS is a multimedia broadcast multicast function defined in 3GPP R6, and is a point-to-multipoint service used to simultaneously transmit a data service of a specific type of content from a data service source to a plurality of users in a specific range. A relatively small quantity of network resources are used to simultaneously provide services (such as multimedia services) for a large quantity of users with a same requirement, so that network resource occupation is reduced. The MBMS supports two modes: a multimedia broadcast service and a multimedia multicast service, and can directly broadcast multimedia video information to all users and also send the broadcast multimedia video information to a group of charged subscribers. The MBMS can help operators implement various commercial applications such as multimedia advertisement, free and charged television channels, and multimedia messaging service group transmission. The operators can implement a mobile phone television service at relatively low network deployment costs.

An eMBMS is an enhanced broadcast multicast technology in a long term evolution (Long Term Evolution, LTE) network, and is one of video bearer technologies in the mobile field. Compared with a previous-generation MBMS video bearer technology, the operators can significantly reduce costs of simultaneously providing high-bandwidth content such as video and audio for a plurality of users in the LTE network. Compared with the previous-generation MBMS video bearer technology, an eMBMS technology can support higher bandwidth, and this means that more channels and video content can be provided, and a video picture is clearer and more smooth, and user experience is better.

In new radio (New Radio, NR), the MBMS is also referred to as a broadcast/multicast service (multicast broadcast service, MBS). In the following descriptions, the MBMS, the eMBMS in LTE, and the MBS in NR are collectively referred to as MBMS. The MBMS includes two transmission technologies: a multimedia broadcast multicast service single frequency network (Multimedia Broadcast multicast service Single Frequency Network, MBMSFN) and single-cell point-to-multipoint (Single-Cell Point-to-Multipoint, SC-PTM) transmission.

(4) LTE-NR dual-connectivity technology

When 4G evolves to 5G, a radio access network and a core network are separated, and a 5G radio access network NR, a 5G core network (5G Core Network, 5CG), a 4G core network (Evolved Packet Core, EPC), and a 4G radio access network LTE are combined to form an evolution route of a plurality of network deployment options.

In dual-connectivity of LTE-NR, the terminal device may be simultaneously connected to one 4G base station (eNB) and one 5G base station (gNB), and obtain a high-rate and low-delay wireless transmission service under close interoperation of a 4G network and a 5G network. In the LTE-NR, a base station that is used as a control plane anchor is referred to as a master node (Master Node, MN), and a base station that plays an auxiliary function is referred to as a secondary node (Secondary Node, SN). Based on a type of the master node, a type of the secondary node, and different connected core networks, dual-connectivity between LTE and NR new radio has three specific architectures in specific implementation: an E-UTRA-NR dual connectivity (EN-DC) architecture, an NR-E-UTRA dual connectivity (NE-DC) architecture, and an NG-RAN E-UTRA-NR dual connectivity (NGEN-DC) architecture.

EN-DC: In the EN-DC architecture, a networking mode is: A 4G core network and a 4G base station eNB are master nodes, and a 5G base station gNB is a secondary node. In the EN-DC architecture, the 5G base station used as the secondary node mainly provides a control plane and a user protocol endpoint of NR for the terminal device.

NE-DC: In the NE-DC architecture, a networking mode is: A 5G core network and a 5G base station gNB are master nodes, and a 4G base station eNB is a secondary node.

NGEN-DC: In the NGEN-DC architecture, a networking mode is: a 5G core network and a 4G base station eNB are master nodes, and a 5G base station gNB is a secondary node.

(5) NR-NR dual-connectivity technology (NR-NR Dual Connectivity, NR-DC)

In an NR-DC architecture, both a master node and a secondary node are 5G base stations gNB, the master node gNB is connected to the 5G base station by using an NG interface, and the master node is connected to the secondary node gNB by using an Xn interface. The secondary node gNB is connected to the 5G base station by using an NG-U interface.

(6) The terms "system" and "network" may be used interchangeably in embodiments of this application. "At least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between associated objects. "At least one of the following items (pieces)" or a similar expression thereof indicates any combination of these items, including a single item (piece) or any combination of a plurality of items (pieces). For example, "at least one of A, B, and C" may include A, B, C, AB, AC, BC, or ABC.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, a first threshold and a second threshold are merely used to distinguish between different thresholds, and do not indicate different priorities or degrees of importance of the two thresholds.

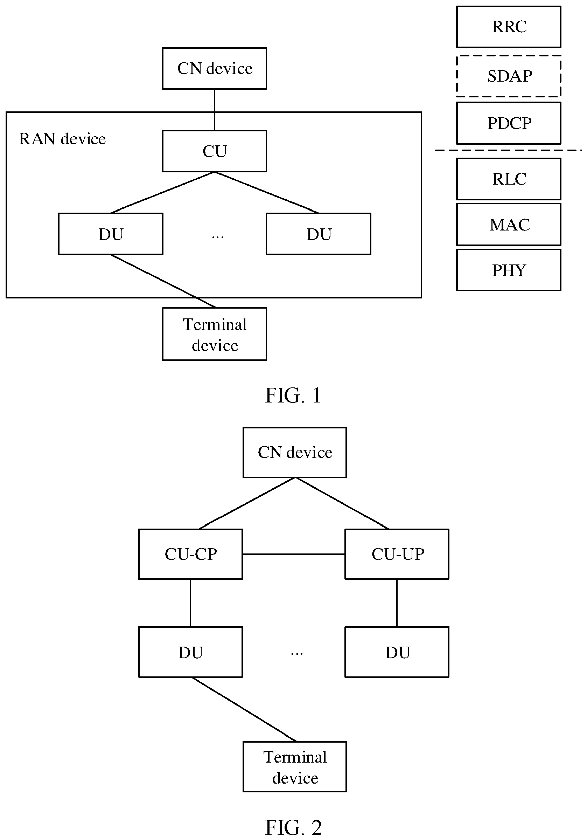

FIG. 1 is a schematic diagram of a network architecture to which an embodiment of this application is applicable. As shown in FIG. 1, the network architecture includes a CN device, a RAN device, and a terminal device. The RAN device includes a baseband apparatus and a radio frequency apparatus. The baseband apparatus may be implemented by one node, or may be implemented by a plurality of nodes. The radio frequency apparatus may be independently implemented by being remote from the baseband apparatus, or may be integrated into the baseband apparatus, or some functions are independently integrated and some functions are integrated into the baseband apparatus. For example, in an LTE communication system, a RAN device (eNB) includes a baseband apparatus and a radio frequency apparatus. The radio frequency apparatus may be disposed remotely from the baseband apparatus. For example, a remote radio unit (remote radio unit, RRU) is a remote antenna unit disposed relative to the BBU.

Communication between the RAN device and the terminal device follows a specific protocol layer structure. For example, a control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer, and a user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

The RAN device may implement functions of protocol layers such as RRC, PDCP, RLC, and MAC by one node, or may implement functions of these protocol layers by a plurality of nodes. For example, in an evolved structure, the RAN device may include a CU and a DU, and a plurality of DUs may be centrally controlled by one CU. As shown in FIG. 1, the CU and the DU may be divided based on a protocol layer of a wireless network, for example, functions of the PDCP layer and a protocol layer above the PDCP layer are disposed in the CU, and functions of protocol layers below the PDCP such as the RLC layer and the MAC layer are disposed in the DU.

Such protocol layer division is only an example, and there may also be another protocol layer division. For example, division is performed at the RLC layer, functions of the RLC layer and a protocol layer above the RLC layer are disposed in the CU, and a function of a protocol layer below the RLC layer is disposed in the DU. Alternatively, division may be performed at a specific protocol layer, for example, some functions of the RLC layer and a function of a protocol layer above the RLC layer are disposed in the CU, and remaining functions of the RLC layer and a function of a protocol layer below the RLC layer are disposed in the DU. In addition, division may alternatively be performed in another manner. For example, division is performed based on a latency. A function whose processing time needs to satisfy a latency requirement is set on the DU, and a function whose processing time does not need to satisfy the latency requirement is set on the CU.

In addition, the radio frequency apparatus may not be disposed in the DU but is integrated independently, or may be integrated into the DU, or a part of the radio frequency apparatus is disposed remotely from the DU and a remaining part is integrated into the DU. This is not limited herein.

FIG. 2 is a schematic diagram of another network architecture to which an embodiment of this application is applicable. Compared with the network architecture shown in FIG. 1, in FIG. 2, a control plane (CP) and a user plane (LTP) of the CU may be further separated and implemented by different entities: a control plane (control plane, CP) CU entity (that is, a CU-CP entity) and a user plane (user plane, UP) CU entity (that is, a CU-UP entity).

In the foregoing network architecture, signaling generated by the CU may be sent to a terminal device by using the DU, or signaling generated by the terminal device may be sent to the CU by using the DU. The DU may directly encapsulate the signaling by using a protocol layer without parsing the signaling, and then transparently transmit the signaling to the terminal device or the CU. In the following embodiments, if this type of signaling is involved in transmission between the DU and the terminal device, sending or receiving the signaling by the DU includes this scenario. For example, signaling at the RRC layer or the PDCP layer is finally processed as signaling at the PHY layer and sent to the terminal device, or is obtained by converting received signaling at the PHY layer. In this architecture, the signaling at the RRC layer or the PDCP layer may be considered as being sent by the DU, or being sent by the DU and the radio frequency apparatus.

The network architectures shown in FIG. 1 and FIG. 2 are applicable to communication systems of various radio access technologies (radio access technologies, RATs), for example, may be an LTE communication system, may be a 5G (or referred to as new radio (new radio, NR)) communication system, or may be a transition system between the LTE communication system and the 5G communication system. The transition system may also be referred to as a 4.5G communication system, and may certainly be a future communication system. A network architecture and a service scenario described in embodiments of this application are intended to describe the technical solutions in embodiments of this application more clearly, and do not constitute any limitation on the technical solutions provided in embodiments of this application. A person of ordinary skill in the art may know that, with evolution of a communication network architecture and emergence of a new service scenario, the technical solutions provided in embodiments of this application are also applicable to a similar technical problem.

The apparatus in the following embodiments of this application may be located in the terminal device or a network device based on a function implemented by the apparatus. When the foregoing CU-DU structure is used, the network device may be a CU node, a DU node, or a RAN device including the CU node and the DU node.

Related technical features in embodiments of this application are described below. It should be noted that these explanations are intended to make embodiments of this application easier to understand, and should not be considered as limiting the protection scope claimed by this application.

1. Reporting of a capability of the terminal device

The network device obtains capability information of the terminal device by using a capability query process. In the capability query process, the network device sends indication information to the terminal device, and the indication information indicates a capability parameter that needs to be reported by the terminal device. The terminal device uploads the corresponding capability information according to an indication of the indication information.

Currently, there is a terminal device with a multi-radio access technology (radio access technology, RAT) capability. The multi-RAT capability is a capability of the terminal device of simultaneously working in a plurality of RATs. A typical representation of the multi-RAT capability is an evolved universal terrestrial radio access and new radio dual connectivity (E-UTRA-NR dual connectivity, EN-DC) mode. EN-DC is a manner in which LTE and NR work together as a dual-connectivity mode, and the LTE is a master node. In other words, one terminal device is connected to both an LTE network device and an NR network device, and is served by both the two network devices. The multi-RAT capability is also requested as a capability type when a capability is requested.

(1) Capability structure of a terminal device in NR

Different terminal devices support different capabilities in a RAT due to different hardware or software versions. To better provide a service for the terminal device, a network needs to know a capability of the terminal device, to configure a proper working mode for the terminal device.

The capability structure of the terminal device in NR includes the following main parts.

Band combination list (Band Combination Lists)

The band combination list is a list of band combinations supported by the terminal device, and specific bands included in a combination included in the list are, for example, band 1+band 2+band 3. Certainly, even if only one band is supported, the band is also reported by using the structure.

Feature set combination (Feature Sets Combinations)

Feature Sets Combinations is a set that includes a plurality of Feature Sets Combinations. Each Feature Sets Combination is a matrix-type element that includes a plurality of featuresetIDs, and each featuresetID is associated with one band, points to one group of physical parameters, and is used to express a capability supported by the terminal device on this band, such as a quantity of carriers, carrier bandwidth, and a multiple-input multiple-output (multiple-input multiple-output, MIMO) capability. Finally, Feature Sets Combinations represents a band combination supported by the terminal device and a capability supported in the band combination.

(2) Capability structure of the terminal device in EN-DC

EN-DC is a manner in which LTE and NR work together as a DC. In other words, one terminal device is connected to both an LTE base station and an NR base station, and is served by both the two base stations. In this case, a capability of the terminal device needs to include three parts: an NR capability of the terminal device, an LTE capability of the terminal device, and an EN-DC capability of the terminal device. The EN-DC capability is a common capability of the LTE and the NR.

The EN-DC capability of the terminal device is distributed in the LTE capability, a multi-radio dual connectivity (Multi-Radio Dual Connectivity, MR-DC) capability, and an NR capability. A network needs to obtain a band combination list in MR-DC, a feature set in the LTE capability, and a feature set in the NR capability, to finally completely obtain the EN-DC capability.

Therefore, if the network device wants to work in an EN-DC mode, the network device needs to request the LTE capability, the MR-DC capability, and the NR capability from the terminal device. The network device can obtain the EN-DC capability of the terminal device through combination only after the terminal device reports the three capabilities.

The LTE capability, the EN-DC capability, and the NR capability may be separately requested by using three capability report request messages, or may be simultaneously requested in a same capability report request message.

2. Capability query process of the terminal device

Unicast communication is performed between the network device and the terminal device. Therefore, the network device generally obtains a capability of the terminal device by using a capability query process, so that the network device sends and receives data in a unicast manner based on the capability of the terminal device. In the capability query process, the network device may send capability query information to the terminal device, to request the capability of the terminal device.

The capability query information generally includes an information element, and the information element includes a plurality of fields that indicate a capability that is of the terminal device and that needs to be requested. The information element in the capability query information sent by the network device may be a filtering function, such as UE-Capability Request Filter Common. The filtering function is used to request a filtered capability of the terminal device. The filtered capability of the terminal device is a capability that is of the terminal device and that meets a requirement of the network device. Therefore, the network device may obtain, by using the filtering function, a capability that is of the terminal device and that the network device indicates the terminal device to report.

For example, the information element is the filtering function UE-Capability Request Filter Common. The information element may include a plurality of fields, and different fields are used to request different types of capabilities of the terminal device. When the information element includes a first field, the first field may be, for example, includeNE-DC. A terminal device that supports NE-DC indicates that the NE-DC is supported in a band combination, and reports a feature set combination applicable to the NE-DC. When the information element includes a second field, the second field is, for example, includeNR-DC. A terminal device that supports NR-DC indicates that the NR-DC is supported in a band combination, and reports a feature set combination applicable to the NR-DC. When the information element includes a third field, the third field may be, for example, omitEN-DC. The terminal device omits reporting of a band combination and a feature set combination that are applicable only to EN-DC.

Based on the foregoing descriptions of the related features, the technical solutions provided in embodiments of this application are generally described below.

In a mobile communication system, communication between the terminal device and the network device is performed on a band (Band). Different terminal devices may support different bands or different band combinations, and the terminal device may have different baseband capabilities on different bands or band combinations. The baseband capabilities may include carrier bandwidth, a quantity of carriers, a quantity of supported channel state indicator (Channel State Indicator, CSI) processes, a quantity of multiple-input multiple-output (Multiple-Input Multiple-Output, MIMO) layers, and the like. The terminal device needs to report information about a supported band or band combination and baseband capability information to the network device. The network device configures a service resource based on the capability of the terminal device.

In a scenario, the terminal device may further receive a broadcast multicast service while performing a unicast operation. In this case, a unicast service and the broadcast multicast service share a baseband capability of the terminal device. Therefore, the terminal device needs to report a capability of further receiving multicast broadcast service while performing the unicast operation to the network device, so that the network device configures the multicast broadcast service based on capability information reported by the terminal device. In view of this, embodiments of this application provide a communication method and a communication apparatus that may be used to report a multicast broadcast service capability, to support the terminal device in further receiving the broadcast multicast service while performing the unicast operation.

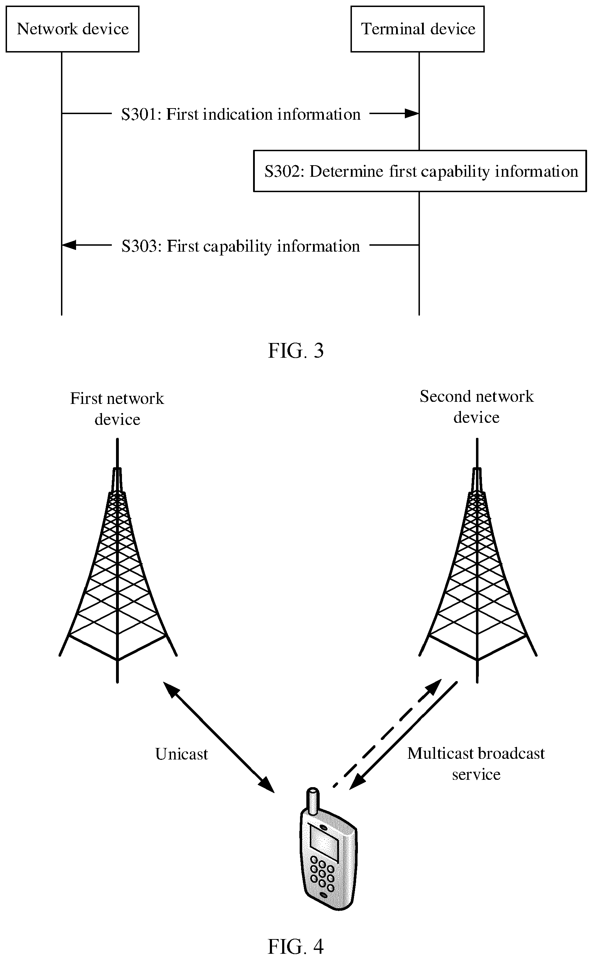

FIG. 3 is a flowchart of a communication method according to an embodiment of this application. The communication method provided in this embodiment of this application is described in detail below with reference to FIG. 3. The communication method includes the following steps.

S301: A terminal device receives first indication information sent by a network device, where the first indication information is used to request a multicast broadcast service capability.

The first indication information is used to request the multicast broadcast service capability, and the network device may indicate, by using the first indication information, the multicast broadcast service capability requested from the terminal device. The multicast broadcast service capability that needs to be reported by the terminal device may be requested jointly by using the first indication information and another field, or the required multicast broadcast service capability may be separately requested from the terminal device by setting different fields in the first indication information.

The network device may separately send the first indication information by using one piece of signaling, or the network device may set the first indication information in existing signaling to be sent to the terminal device.

S302: The terminal device determines first capability information based on the first indication information, where the first capability information includes the multicast broadcast service capability, and the multicast broadcast service capability is a capability that the terminal device further receives a multicast broadcast service while performing a unicast operation.

The terminal device receives the first indication information, and the terminal device may determine, based on the first indication information, the multicast broadcast service capability requested by the network device, and send the determined multicast broadcast service capability to the network device by using the first capability information.

When the first indication information and another field jointly request the multicast broadcast service capability, the terminal device determines the multicast broadcast service capability based on the first indication information and another field. When the first indication information independently requests the multicast broadcast service capability, the terminal device determines the multicast broadcast service capability only based on the first indication information.

S303: The terminal device sends the first capability information to the network device.

The terminal device sends the determined multicast broadcast service capability to the network device by using the first capability information. The terminal device may separately send the first capability information by using one piece of signaling, or may set the first capability information in existing signaling sent by the terminal device to the network device. In this way, signaling overheads are reduced.

In this embodiment of this application, that the terminal device performs the unicast operation means that the terminal device transmits and receives data/performs communication in a unicast manner. Alternatively, performing the unicast operation may be understood as performing unicast communication between the terminal device and the network device. The terminal device can further receive the multicast broadcast service while performing the unicast operation. A network device that performs unicast communication with the terminal device and a network device that performs multicast broadcast service communication with the terminal device may be a same network device, or may be different network devices.

FIG. 4 is a schematic diagram of an optional application scenario according to an embodiment of this application. As shown in FIG. 4, in this embodiment of this application, a network device that performs unicast communication with the terminal device and a network device that performs multicast broadcast service communication with the terminal device may be different network devices. For example, the terminal device may simultaneously communicate with a first network device and a second network device. The terminal device performs the unicast operation with the first network device, and may simultaneously receive the multicast broadcast service from the second network device. In this case, the network device that sends the first indication information may be the first network device. The terminal device mainly performs downlink communication with the second network device; in other words, the second network device sends multicast broadcast service data to the terminal device. The terminal device may also perform uplink communication with the second network device, and the terminal device may send a feedback to the second network device.

When the network device that performs unicast communication with the terminal device and the network device that performs multicast broadcast service communication with the terminal device are different network devices, the network device that performs unicast communication with the terminal device and the network device that sends the multicast broadcast service separately configure resources for a unicast service and the multicast broadcast service. Because the unicast communication and the broadcast multicast communication share a baseband capability of the terminal device, if the network device that performs the unicast communication cannot learn a configuration status of the multicast broadcast service, resource configuration performed by the first network device and resource configuration performed by the second network device may exceed the baseband capability of the terminal device. In this case, the terminal device does not support simultaneous operations of the unicast communication and the multicast broadcast service.

In this embodiment of this application, the first network device and the second network device may be respectively a network device in an NR system and a network device in an LTE system; both the first network device and the second network device may be network devices in the NR system; or both the first network device and the second network device are network devices in the LTE system. When the first network device is a network device in the NR system, and the second network device is a network device in the LTE system, such a deployment mode may be used as an intermediate supplement for migrating from an LTE multicast broadcast service to an NR multicast broadcast service, so that the multicast broadcast service is received in the NR system.

The network device that performs the unicast communication with the terminal device and the network device that performs the multicast broadcast service communication with the terminal device may alternatively be a same network device.

The multicast broadcast service capability in this embodiment of this application is the capability that the terminal device further receives the multicast broadcast service while performing the unicast operation. In other words, the multicast broadcast service capability is a capability that the terminal device receives the multicast broadcast service and performs unicast simultaneously. The multicast broadcast service capability in this embodiment of this application may alternatively be a capability that the terminal device further receives the multicast broadcast service from the second network device while performing the unicast operation with the first network device.

Alternatively, the multicast broadcast service capability may be a capability of further receiving the multicast broadcast service from the second network device in a receive only mode (Receive Only Mode, ROM) while performing the unicast operation with the first network device. The ROM mode is a mode in which the terminal device is allowed to receive only the multicast broadcast service but does not need to access or register with a public land mobile network (Public Land Mobile Network, PLMN) that provides the multicast broadcast service.

In this embodiment of this application, the terminal device receives the first indication information sent by the network device, and the first indication information indicates the multicast broadcast service capability that needs to be reported by the terminal device. The terminal device determines, based on the first indication information, the multicast broadcast service capability that needs to be reported, and sends the multicast broadcast service capability to the network device by using the first capability information. The network device may perform unicast configuration based on the multicast broadcast service capability reported by the terminal device. Therefore, it can be ensured that the terminal device can further receive the multicast broadcast service while performing the unicast operation.

It should be noted that the foregoing content described with reference to FIG. 3 and FIG. 4 is an overview description of the technical solutions provided in embodiments of this application, and the foregoing content is applicable to all subsequent embodiments of this application.

Possible implementations of the technical solutions provided in embodiments of this application are described below. First, a first embodiment, a second embodiment, and a third embodiment of this application are generally described.

In the first embodiment of this application, a network device sends first indication information to a terminal device to request a multicast broadcast service capability, and the first indication information and capability query information may jointly indicate a type of the requested multicast broadcast service capability. The first indication information is used to request the multicast broadcast service capability, and the capability query information indicates a requested multicast broadcast service capability corresponding to one or more specific types of band combinations, so that the first indication information and the capability query information jointly indicate the type of the requested multicast broadcast service capability. The terminal device determines, based on the first indication information and the capability query information, different types of multicast broadcast service capabilities that need to be sent to the network device.

In the second embodiment of this application, a network device sends first indication information to a terminal device to request a multicast broadcast service capability, and the first indication information can indicate a type of the multicast broadcast service capability to be requested. The terminal device determines, based on the first indication information, different types of multicast broadcast service capabilities that need to be sent to the network device. In the third embodiment of this application, that the multicast broadcast service capability is a capability of further receiving a multicast broadcast service from a second network device in a ROM mode while performing a unicast operation with a first network device in the first embodiment and the second embodiment is specially described.

In the first embodiment, the second embodiment, and the third embodiment of this application, the network device that sends the first indication information may be referred to as the first network device. The first embodiment, the second embodiment, and the third embodiment of this application are described in detail below with reference to the accompanying drawings.

**First embodiment**

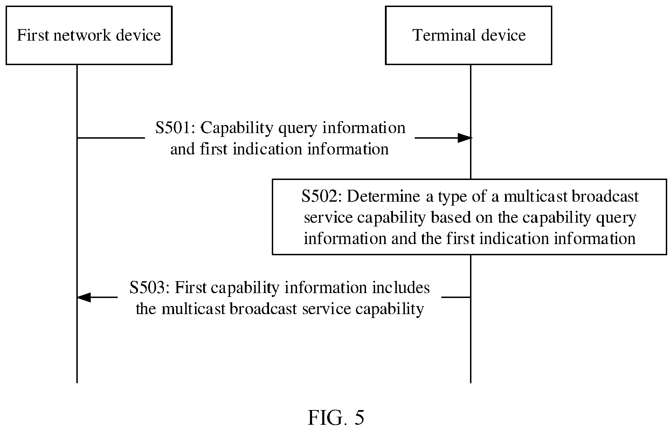

FIG. 5 is a schematic diagram of a communication method according to the first embodiment of this application. As shown in FIG. 5, the method includes the following steps.

S501: A first network device sends capability query information and first indication information to a terminal device.

The capability query information is used to request a capability of the terminal device, and the first indication information and the capability query information indicate a type of a multicast broadcast service capability. The type of the multicast broadcast service capability is multicast broadcast service capabilities corresponding to different band combinations. In other words, the type of the multicast broadcast service capability is classified based on the band combination. In an example, a multicast broadcast service capability corresponding to an NE-DC band combination may be referred to as a first-type multicast broadcast service capability, a multicast broadcast service capability corresponding to an NR-DC band combination may be referred to as a second-type multicast broadcast service capability, and a multicast broadcast service capability corresponding to an EN-DC band combination may be referred to as a third-type multicast broadcast service capability.

In addition, the type of the multicast broadcast service capability may also be classified in another manner, for example, may be classified depending on whether the multicast broadcast service capability is related to multicast. In other words, the first network device indicates, by using a type indication, that the terminal device requests to report capability information related to multicast. Other classification manners are not limited herein.

In S501, the first network device may send the first indication information to the terminal device in a plurality of implementations. In a possible implementation, the capability query information may include the first indication information, and the first indication information is sent to the terminal device together with the capability query information. In another possible implementation, the first indication information may be included in an information element of the capability query information; or a new information element may be set in the capability query information, and the first indication information is set in the new information element.

The capability query information in this embodiment of this application may include a first information element, and the first information element is used to request the capability of the terminal device. Specifically, the first information element may be a filtering function, such as UE-Capability Request Filter Common. The filtering function is used to request a filtered capability of the terminal device. Herein, the filtered capability of the terminal device is a capability that is of the terminal device and that meets a requirement of the first network device. In other words, the first network device indicates, by using the first information element, a capability of the terminal device that needs to be reported by the terminal device. Correspondingly, that the terminal device determines, based on the first information element, the capability that is of the terminal device and that needs to be reported may be understood as obtaining the reported capability of the terminal device through filtering. The first indication information may be in the first information element, the first indication information may be a new field in the first information element, and a function of the new field indicates the multicast broadcast service capability to be requested.

The first indication information and the capability query information may alternatively be separately sent, and this is not limited in the first embodiment.

In S501, the first indication information may be indicated by using 1 bit.

In S501, the type of the requested multicast broadcast service capability may be indicated by using a field in the capability query information and the first indication information.

When the capability query information includes a first field, the first network device requests, by using the first indication information and the first field, a multicast broadcast service capability corresponding to the NE-DC band combination.

When the capability query information includes a second field, the first network device requests, by using the first indication information and the second field, a multicast broadcast service capability corresponding to the NR-DC band combination.

When the capability query information includes a third field, the first network device requests, by using the first indication information and the third field, a multicast broadcast service capability corresponding to the EN-DC band combination, and the first network device indicates, by using the first indication information and the third field, the terminal device to omit a band combination that is in the EN-DC band combination and that is not related to a multicast broadcast service.

In the first embodiment, the first field may be includeNE-DC, the second field may be includeNR-DC, and the third field may be omitEN-DC. It may be understood that this is merely an example, and does not limit this embodiment of this application.

S502: The terminal device determines the type of the multicast broadcast service capability based on the capability query information and the first indication information.

In an example, the type of the multicast broadcast service capability is classified based on the band combination. Correspondingly, the multicast broadcast service capability may be in a correspondence with the band combination.

It may be understood that the "correspondence" means that in different band combinations, some band combinations correspond to a broadcast multicast capability, and some band combinations do not correspond to the broadcast multicast capability. In addition, in the band combinations corresponding to the broadcast multicast capability, multicast broadcast capabilities corresponding to different band combinations may be the same or different, and this is not limited in the present invention.

Band combinations supported by the terminal device may include a band combination related to the multicast broadcast service, and may also include a band combination that is not related to the multicast broadcast service. Table 1 is an example of the correspondence between the multicast broadcast service capability and the band combination shown in the first embodiment. As shown in Table 1, the terminal device supports n band combinations: a band combination 1 to a band combination n, and each band combination includes a plurality of component carriers (Component Carrier, CC).

**Table 1: Example of the correspondence between the multicast broadcast service capability and the band combination**

| Band combination number | Component carrier included in a band combination | Component carrier corresponding to a multicast broadcast service | Component carrier corresponding to unicast | Multicast broadcast service capability |
|---|---|---|---|---|
| 1 | $CC_1+CC_2$ | $CC_1$ | $CC_2$ | Capability 1 |
| 2 | $CC_1+CC_3+CC_5$ | $CC_1$ | $CC_3+CC_5$ | Capability 2 |
| ... | ... | ... | ... | ... |
| n | $CC_n+CC_{n+1}$ | | $CC_n+CC_{n+1}$ | |

Component carriers included in the band combination 1 include $CC_1+CC_2$. A component carrier corresponding to the multicast broadcast service is the $CC_1$, and a component carrier corresponding to the unicast is the $CC_2$. Component carriers included in the band combination 2 include $CC_1+CC_3+CC_5$. A component carrier corresponding to the multicast broadcast service is the $CC_1$, and component carriers corresponding to the unicast are $CC_3+CC_5$. Component carriers included in the band combination n include $CC_n+CC_{n+1}$. Component carriers corresponding to the unicast are $CC_n+CC_{n+1}$.

Therefore, in the band combination 1, the band combination 2, and the band combination n, band combinations related to the multicast broadcast service are the band combination 1 and the band combination 2. A multicast broadcast service capability corresponding to the band combination 1 is the capability 1, a multicast broadcast service capability corresponding to the band combination 2 is the capability 2, and the capability 1 and the capability 2 may be the same or different.

The band combination supported by the terminal device may include at least one of the following: an EN-DC band combination, an NE-DC band combination, an NR-DC band combination, a carrier aggregation (Carrier Aggregation, CA) band combination, or another multi-radio dual connectivity (Multi-Radio Dual Connectivity, MR-DC) band combination. These band combinations may be referred to as different types of band combinations. One type of band combination such as the EN-DC band combination may include a plurality of band combinations. A correspondence between each band combination and the multicast broadcast service capability may be represented in the manner in Table 1.

The EN-DC band combination is a band combination that is supported by the terminal device and that is applicable to an EN-DC mode, the NE-DC band combination is a band combination that is supported by the terminal device and that is applicable to an NE-DC mode, the NR-DC band combination is a band combination that is supported by the terminal device and that is applicable to an NR-DC mode, and the CA band combination is a carrier aggregation band combination that is supported by the terminal device.

For example, when the terminal device supports the EN-DC band combination and the CA band combination, there is a correspondence between the multicast broadcast service and the two types of band combinations, as shown in Table 1a and Table 1b.

**Table 1a: Example of a correspondence between the multicast broadcast service capability and a plurality of types of band combinations**

| EN-DC band combination number | Component carrier included in a band combination | Component carrier corresponding to a multicast broadcast service | Component carrier corresponding to unicast | Multicast broadcast service capability |
|---|---|---|---|---|
| 1 | $CC_1+CC_2$ | $CC_1$ | $CC_2$ | Capability 1 |
| 2 | $CC_1+CC_3+CC_5$ | $CC_1$ | $CC_3+CC_5$ | Capability 2 |
| ... | ... | ... | ... | ... |
| n | $CC_n+CC_{n+1}$ | | $CC_n+CC_{n+1}$ | |

**Table 1b: Example of a correspondence between the multicast broadcast service capability and a plurality of types of band combinations**

| CA band combination number | Component carrier included in a band combination | Component carrier corresponding to a multicast broadcast service | Component carrier corresponding to unicast | Multicast broadcast service capability |
|---|---|---|---|---|
| 1 | $CC_1+CC_2$ | $CC_1$ | $CC_2$ | Capability 1 |
| 2 | $CC_1+CC_3+CC_5$ | $CC_1$ | $CC_3+CC_5$ | Capability 2 |
| ... | ... | ... | ... | ... |
| n | $CC_n+CC_{n+1}$ | | $CC_n+CC_{n+1}$ | |

A process in which the terminal device determines different types of multicast broadcast service capabilities based on the first indication information and the capability query information is described below.

When the capability query information includes a first field, the terminal device determines the multicast broadcast service capability based on the first field and the first indication information. In this case, the multicast broadcast service capability determined by the terminal device is a multicast broadcast service capability corresponding to the NE-DC band combination.

When the capability query information includes a second field, the terminal device determines the multicast broadcast service capability based on the second field and the first indication information. In this case, the multicast broadcast service capability determined by the terminal device is a multicast broadcast service capability corresponding to the NR-DC band combination.

When the capability query information includes a third field, the terminal device determines a multicast broadcast service capability based on the third field and the first indication information. In this case, the multicast broadcast service capability determined by the terminal device is a multicast broadcast service capability corresponding to the EN-DC band combination. In addition, the terminal device omits, based on the third field and an indication of the first indication information, reporting of a band combination that is in the EN-DC combination and that is not related to the multicast broadcast service.

In other words, the terminal device may determine the first-type multicast broadcast service capability based on the first indication information and the first field, determine the second-type multicast broadcast service capability based on the first indication information and the second field, and determine the third-type multicast broadcast service capability based on the first indication information and the third field.

The multicast broadcast service capability may include at least one of the following information:

information indicating whether the terminal device supports further receiving the multicast broadcast service while performing the unicast operation;
maximum bandwidth supported by the terminal device for receiving the multicast broadcast service;
a scaling factor of the multicast broadcast service;
whether the terminal device supports receiving the multicast broadcast service at a frequency of a secondary cell; and
whether the terminal device supports receiving the multicast broadcast service at a frequency of a serving cell, where the serving cell is a cell in a master cell group or a secondary cell group.

The information indicating whether further receiving of the multicast broadcast service while the unicast operation is performed is supported may be indicated by using a bit (bit). For example, 1 bit may be used for indication. When the bit is set to 1, it indicates that further receiving of the multicast broadcast service while the unicast operation is performed is supported. On the contrary, when the bit is set to 0, it indicates that further receiving of the multicast broadcast service while the unicast operation is performed is not supported. Another manner may be that a field is used for indication. For example, when the multicast broadcast service capability includes this field, it indicates that further receiving of the multicast broadcast service while the unicast operation is performed is supported, and on the contrary, it indicates that further receiving of the multicast broadcast service while the unicast operation is performed is not supported.

For the maximum bandwidth supported by the terminal device for receiving the multicast broadcast service, in this embodiment of this application, the maximum bandwidth supported by the terminal device for receiving the multicast broadcast service is indicated in a plurality of manners. Two possible manners are described below as examples.

Manner 1: Indicate in an explicit manner. For example, a field mbms-MaxBW represents maximum bandwidth of the multicast broadcast service, and a value of mbms-Ma$_Y$BW is indicated by using a bit. The value may be, for example, any positive integer from 2 to 20.

Manner 2: Indicate in either an explicit manner or an implicit manner.

If indication is performed in either the explicit manner or the implicit manner, indication information indicates whether the indication is performed in the explicit manner or the implicit manner. Possible implementations include the following cases.

(1) An explicit value (explicitValue) or an implicit value (implictValue) is indicated in a choice manner. If the implicit value is indicated, the terminal device uses a pre-obtained mbms-MaxBW value according to an indication of the implicit value. The pre-obtained value may be predefined in a protocol or pre-obtained from a base station.

(2) Determining is performed depending on whether a field of an explicit value exists. If the explicit value (explicitValue) exists, the first network device determines, based on the explicitValue, an mbms-MaxBW value corresponding to the terminal device. Otherwise, if the field of the explicit value is not configured, the first network device considers that an mbms-MaxBW value corresponding to the terminal device is a default value.

The scaling factor of the multicast broadcast service is a ratio factor of one bandwidth unit for processing a first subcarrier spacing to one bandwidth unit for processing a default subcarrier spacing, and the first subcarrier spacing corresponds to the multicast broadcast service. The first subcarrier spacing may be 0.37 kHz, 1.25 kHz, 7.5 kHz, 15 kHz, 30 kHz, 60 kHz, 120 kHz, or 240 kHz, and the default subcarrier spacing may be 0.37 kHz, 1.25 kHz, 7.5 kHz, 15 kHz, 30 kHz, 60 kHz, 120 kHz, 240 kHz, or another subcarrier spacing value listed above. This is not limited herein. There may be one or more scaling factors. When there are a plurality of scaling factors, the network device configures corresponding scaling factor values for first subcarrier spacings of different values. Scaling factor values corresponding to the first subcarrier spacings of different values may be a same value or different values.

An example is used below to describe how the network device determines a baseband capability limitation of the terminal device based on the multicast broadcast service capability in this embodiment of this application, to avoid exceeding a baseband capability of the terminal device. The terminal device sends a multicast broadcast service to the network device by using first capability information. The network device determines the baseband capability of the terminal device based on the information by using a predetermined formula, to determine whether the band combination needs to be adjusted. When it is found that a current baseband capability of the terminal device is to exceed the limitation, a quantity of band combinations may be reduced. On the contrary, if there is enough headroom in the current baseband capability of the terminal device, the quantity of band combinations may be appropriately increased, but it is ensured that the baseband capability limitation of the terminal device is not exceeded after the quantity of band combinations is increased.

As an example for description, the multicast broadcast service capability includes the maximum bandwidth (mbms-MaxBW) for receiving the multicast broadcast service and scaling factors corresponding to a plurality of first subcarrier spacings.

For example, the first subcarrier spacing is 15 kHz, 7.5 kHz, 2.5 kHz, 1.25 kHz, or 0.37 kHz. Correspondingly, scaling factors corresponding to the first subcarrier spacings may be mbms-Scalingfactor1dot25($A^{(15)}$), mbms-Scalingfactor0dot25($A^{(7.5)}$), mbms-Scalingfactor0dot25($A^{(2.5)}$), mbms-Scalingfactor0dot25($A^{(1.25)}$), and mbms-Scalingfactor0dot25($A^{(0.37)}$).

The baseband capability limitation of the terminal device may meet the following inequation:

$$\mathrm{T} \geq \sum_{c=1}^{C} (R_C B_C I_C^{(15kHz)} + A^{(7.5)} B_C I_C^{(7.5kHz)} + A^{(2.5)} B_C I_C^{(2.5kHz)} + A^{(1.25)} B_C I_C^{(1.25kHz)} + A^{(0.37)} B_C I_C^{(0.37kHz)})$$

It should be noted that the foregoing inequation is merely described by using an example in which the first subcarrier spacing is 15 kHz, 7.5 kHz, 2.5 kHz, 1.25 kHz, or 0.37 kHz. When a new subcarrier spacing is introduced in a current communication system or a subsequent communication system, a core idea of the foregoing inequation is still applicable, to indicate the baseband capability limitation of the terminal device. Only a corresponding scaling factor needs to be correspondingly added. For example, when a new subcarrier spacing x kHz is introduced, a summation term is added to a corresponding *inequation* $A^{(x} B_C I_C^{(xkHz}$. The newly introduced subcarrier spacing x kHz may be 30 kHz, 60 kHz, 120 kHz, or 240 kHz.

Each parameter in the inequation is described below.

T is a maximum bandwidth capability of the terminal device, that is, maximum baseband bandwidth that can be processed by the terminal device. C indicates a quantity of a plurality of serving cells that are configured by the network device for the terminal device for receiving. $R_c$ is a quantity of spatial layers that can be received by the terminal device in a $c^{th}$ serving cell based on a downlink multiple-input multiple-output capability (MIMO-CapabilityDL). Be is bandwidth of the c<sup>th</sup> serving cell, and is in units of MHz. $I_c$ indicates that when the subcarrier spacing is set to a corresponding value, a value of $I_c$ is 1; otherwise, a value of $I_c$ is 0. For example, in the foregoing inequation, when the first subcarrier spacing is 15 kHz, $I_C^{(15kHz)}=1$, $I_C^{(7.5kHz)}=0$, $I_C^{(1.25kHz)}=0$, and so on.

A parameter on a left side of the inequation, that is, the maximum baseband bandwidth T that can be processed by the terminal device, is a baseband capability limitation indicated by the terminal device to the network device. A right side of the inequation represents an actual baseband capability of the terminal device that is calculated by the network device. The actual baseband capability of the terminal device that is calculated by the network device needs to be less than or equal to the maximum baseband bandwidth T that can be processed and reported by the terminal device. To meet constraints of the inequation, the network device may adjust remaining parameters on the right side of the inequation based on T on the left side of the inequation and the multicast broadcast service capability reported by the terminal device on the right side of the inequation, such as the first subcarrier spacing, to meet the constraints of the inequation. T may be indicated by the maximum bandwidth (mbms-MaxBW) supported by the terminal device for receiving the multicast broadcast service. A manner in which T is indicated by the maximum bandwidth supported by the terminal device for receiving the multicast broadcast service may include explicit indication or implicit indication.

For an implicit indication manner, T may be represented as:

$$T=\text{round}\left(\frac{\text{Maximum DL that can be received in one TTI} - \text{Quantity of SCH transport block bits}}{\text{Corresponding maximum transport block size when a maximum supported modulation and coding mechanism is used and spatial MIMO is 2 layers}}\right)\times 20\ \text{MHZ}$$

Herein, a numerator identifies a maximum quantity of downlink shared channel (DownLink Shared Channel, DL-SCH) transport block bits (bit) that can be received in one time interval (Transmission Time Interval, TTI), and a denominator identifies a corresponding maximum transport block size (TBS, Transport Block Size) when a maximum supported modulation and coding mechanism is used and a multiple-input multiple-output (Multiple-Input Multiple-Output, MIMO) technology is two layers, and the two layers are a quantity of spatial layers. Both the numerator and the denominator may be obtained by the network device by configuring a parameter, that is, a terminal device category. Specifically, the numerator and the denominator are obtained by querying a table by using an indication of the terminal device category. Table 2 shows downlink physical layer parameter values that are set for the terminal device category. A first column is the terminal device category, a second column is a maximum quantity of DL-SCH transport block bits received in one time interval TTI, a third column is a maximum quantity of soft channel bits, and a fifth column is a maximum quantity of streams or spatial layers supported in downlink space division multiplexing.

**Table 2: Downlink physical layer parameter values that are set for the terminal device category**

| Terminal device category | Maximum quantity of DL-SCH transport block bits received in one TTI | Maximum quantity of soft channel bits | Maximum quantity of streams supported in downlink space division multiplexing |
|---|---|---|---|
| Category 1 | 10296 | 250368 | 1 |
| Category 2 | 51024 | 1237248 | 2 |
| Category 3 | 102048 | 1237248 | 2 |
| Category 4 | 150752 | 1827072 | 2 |
| Category 5 | 299552 | 3667200 | 4 |
| Category 6 | 301504 | 3654144 | 2 or 4 |
| ... | ... | ... | ... |

If mbms-MaxBW is indicated in the explicit manner,
T=explicitValue*40 MHz, where explicitValue is an mbms-MaxBW value indicated in the explicit manner.

That the terminal device determines different types of multicast broadcast service capabilities based on the first indication information and the capability query information is described below by using some specific examples.

First, how the terminal device determines the multicast broadcast service capability is described by using an example in which the capability query information includes the first field and the multicast broadcast service capability includes the maximum bandwidth mbms-MaxBW supported for receiving the multicast broadcast service. A band combination applicable to the NE-DC mode is shown in Table 3.

**Table 3: Examples of the band combination applicable to the NE-DC mode and a corresponding multicast broadcast service capability**

| NE-DC band combination number | Band combination information | Related to a multicast broadcast service or not | Corresponding multicast broadcast service capability |
| --- | --- | --- | --- |
| 1 | $CC_1+CC_2$ | Yes | mbms-MaxBW1 |
| 2 | $CC_2+CC_3$ | Yes | mbms-MaxBW2 |
| 3 | $CC_4+CC_5+CC_6$ | No | Null |
| 4 | $CC_5+CC_6+CC_7$ | Yes | mbms-MaxBW4 |

As shown in Table 3, there are four band combinations applicable to the NE-DC mode. A second column in Table 3 is band combination information of the NE-DC band combination, such as information about a component carrier included in the NE-DC band combination. A third column in Table 3 is information about whether the band combination is related to the multicast broadcast service. A fourth column in Table 3 is information about the multicast broadcast service capability corresponding to the band combination.

An NE-DC band combination 1, an NE-DC band combination 2, and an NE-DC band combination 4 are related to the multicast broadcast service, and the NE-DC band combination 1, the NE-DC band combination 2, and the NE-DC band combination 4 each correspond to a multicast broadcast service capability. A multicast broadcast service capability corresponding to the NE-DC band combination 1 is mbms-MaxBW1, a multicast broadcast service capability corresponding to the NE-DC band combination 2 is mbms-MaxBW2, and a multicast broadcast service capability corresponding to the NE-DC band combination 4 is mbms-MaxBW4. The terminal device may further determine, based on the first field and the first indication information, that the multicast broadcast service capability corresponding to the NE-DC band combination 3 is null.

In Table 3, mbms-MaxBW means the maximum bandwidth supported by the terminal device for receiving the multicast broadcast service. In Table 3, the multicast broadcast service capability is mbms-MaxBW as an example for description. It may be understood that a plurality of types of content is included in the multicast broadcast service capability, and mbms-MaxBW is merely used as an example herein for description. This does not constitute a limitation on the first embodiment of this application.

When the capability query information includes the second field, a method for determining the multicast broadcast service capability by the terminal device is similar to that used when the capability query information includes the first field. Still as an example, there are four band combinations applicable to the NR-DC mode. An NR-DC band combination 2, an NR-DC band combination 3, and an NR-DC band combination 4 are related to the multicast broadcast service, and the NR-DC band combination 2, the NR-DC band combination 3, and the NR-DC band combination 4 each correspond to a multicast broadcast service capability. A multicast broadcast service capability corresponding to the NR-DC band combination 2 is mbms-MaxBW2, a multicast broadcast service capability corresponding to the NR-DC band combination 3 is mbms-MaxBW3, and a multicast broadcast service capability corresponding to the NR-DC band combination 4 is mbms-MaxBW4. The terminal device may further determine, based on the second field and the first indication information, that the multicast broadcast service capability corresponding to the NR-DC band combination 1 is null.

When the capability query information includes the third field, the terminal device determines the multicast broadcast service capability based on the third field and the first indication information.

In this case, the multicast broadcast service capability determined by the terminal device is a multicast broadcast service capability corresponding to the EN-DC band combination, and the EN-DC band combination is related to the multicast broadcast service.

In other words, the terminal device determines the multicast broadcast service capability corresponding to the EN-DC band combination, but omits a band combination that is in the EN-DC band combination and that is not related to the multicast broadcast service.

There are two manners in which the terminal device determines the multicast broadcast service capability based on the third field and the first indication information.

Manner 1: The terminal device determines the multicast broadcast service capability, and the multicast broadcast service capability corresponds to the EN-DC band combination, but the EN-DC band combination does not include a band combination that is not related to the multicast broadcast service.

In other words, the multicast broadcast service capability corresponds to an EN-DC band combination related to the multicast broadcast service.

Table 4a shows an example of a correspondence between the EN-DC band combination and the multicast broadcast service. As shown in Table 4a, an EN-DC band combination 1 and an EN-DC band combination 2 are related to the multicast broadcast service, and a band combination that is in the EN-DC band combination and that is not related to the multicast broadcast service is not shown in Table 4a.

**Table 4a: Example of the correspondence between the EN-DC band combination and the multicast broadcast service**

| EN-DC band combination | Component carrier corresponding to a multicast broadcast service | Component carrier corresponding to unicast |
|---|---|---|
| 1 | $CC_1$ | $CC_2$ |
| 2 | $CC_3$ | $CC_2+CC_5$ |

For the manner 1, the terminal device directly determines that multicast broadcast service capabilities that need to be sent to the first network device are a multicast broadcast service capability corresponding to the EN-DC band combination 1 and a multicast broadcast service capability corresponding to the EN-DC band combination 2 in Table 4a.

Manner 2: The terminal device determines broadcast multicast capability information corresponding to the EN-DC band combination, and then deletes or omits broadcast multicast capability information corresponding to a band combination that is in the broadcast multicast capability information and that is not related to the multicast broadcast service.

**Table 4b: Another example of the correspondence between the EN-DC band combination and the multicast broadcast service**

| EN-DC band combination | Component carrier corresponding to a multicast broadcast service | Component carrier corresponding to unicast |
|---|---|---|
| 1 | $CC_1$ | $CC_2$ |
| 2 | $CC_3$ | $CC_2+CC_5$ |
| 3 | | $CC_2+CC_4+CC_5$ |
| 4 | | $CC_4+CC_6+CC_7$ |

In the manner 2, in a process of determining the multicast broadcast service capability, the terminal device first determines information corresponding to all EN-DC band combinations; in other words, the terminal device first determines information corresponding to the EN-DC band combination 1 to the EN-DC band combination 4. Then, capability information corresponding to a band combination related to multicast broadcast is screened out from the EN-DC band combination 1 to the EN-DC band combination 4; in other words, the multicast broadcast service capability corresponding to the EN-DC band combination 1 and the multicast broadcast service capability corresponding to the EN-DC band combination 2 are placed in first multicast capability information and reported to the first network device. Reporting of the EN-DC band combination 3 and the EN-DC band combination 4 is omitted.

The multicast broadcast service capability finally determined by the terminal device based on the third field and the first indication information in the manner 1 and the multicast broadcast service capability finally determined by the terminal device based on the third field and the first indication information in the manner 2 are the same, except that determining processes are different. In the manner 1, the multicast broadcast service capability is directly determined as the multicast broadcast service capability corresponding to the EN-DC band combination 1 and the multicast broadcast service capability corresponding to the EN-DC band combination 2. In the manner 2, the terminal device determines that the multicast broadcast service capability is a capability corresponding to all EN-DC band combinations, and then omits the EN-DC band combination 3 and the EN-DC band combination 4 that are not related to the multicast broadcast service.

In the first embodiment of this application, as an example, the third field may be omitEN-DC.

In the first embodiment of this application, a process in which the terminal device determines the multicast broadcast service capability based on the first indication information and the third field is compared with a process in which the terminal device determines a capability of the terminal device based on the third field in the capability query information, to further describe a difference in the first embodiment of this application.

In a process of querying the capability of the terminal device, when the capability query information includes the third field, the terminal device omits, based on the third field, reporting of a band combination and a feature set combination that are applicable only to the EN-DC mode; in other words, the band combination and the feature set combination that are applicable only to the EN-DC mode are omitted, and are not reported to the first network device.

In the first embodiment of this application, when the terminal device determines the multicast broadcast service capability based on the third field and the first indication information, the band combination and the feature set combination that are applicable only to the EN-DC mode are not directly omitted. The multicast broadcast service capability determined by the terminal device includes a multicast broadcast service capability corresponding to a band combination that is in the EN-DC band combination and that is related to the multicast broadcast service, and a band combination that is in the EN-DC band combination and that is not related to the multicast broadcast service is omitted.

S503: The terminal device sends the first capability information to the first network device, where the first capability information includes the multicast broadcast service capability.

The multicast broadcast service capability corresponds to the band combination. Therefore, when sending the multicast broadcast service capability to the first network device, the multicast broadcast service capability may further include band combination information, and the band combination information indicates a band combination in which the multicast broadcast service is further received while the unicast operation is performed. In one manner, the band combination information in the first capability information includes at least one of the following: a quantity of band combinations, a carrier component included in the band combination, or a feature set combination corresponding to the band combination. In another manner, the band combination information includes second indication information, and the second indication information indicates that the band combination information corresponding to the multicast broadcast service is reported in a first sequence. The foregoing two manners are separately described below.

Manner 1: The first capability information includes the multicast broadcast service capability, and further includes the band combination information. The band combination information includes at least one of the following: a quantity of band combinations, a carrier component included in the band combination, or a feature set combination corresponding to the band combination. Table 3 is still used as an example. The terminal device sends the first capability information to the first network device. The first capability information includes information $CC_1+CC_2$ of the NE-DC band combination 1, and the multicast broadcast service capability mbms-MaxBW1 corresponding to the NE-DC band combination 1. Similarly, the first capability information further includes information $CC_2+CC_3$ corresponding to the NE-DC band combination 2, the multicast broadcast service capability mbms-MaxBW2 corresponding to the NE-DC band combination 2, information $CC_5+CC_6+CC_7$ of the NE-DC band combination 4, and the multicast broadcast service capability mbms-MaxBW4 corresponding to the NE-DC band combination 4.

For the manner 1, the sent first capability information includes a quantity of band combinations, a carrier component included in the band combination, a feature set combination corresponding to the band combination, and the like.

Manner 2: The NE-DC band combination is still used as an example. The terminal device may have reported a quantity of NE-DC band combinations, a carrier component included in the band combination, a feature set combination corresponding to the band combination, or the like to the first network device in the capability query process of the terminal device. Therefore, the information may not be repeatedly reported in the first capability information, and the correspondence between the multicast broadcast service capability and the band combination is indicated in a manner of indication information. In this embodiment of this application, the band combination information may include second indication information, and the second indication information indicates that the multicast broadcast service capability is sent in the first sequence. Because the multicast broadcast service capability and the band combination are in one-to-one correspondence, it may be understood that the second indication information may also indicate the first sequence of band combinations corresponding to the multicast broadcast service; in other words, in this case, a sequence of band combinations corresponding to multicast broadcast service capabilities is used to identify a sequence of the multicast broadcast service capabilities. The first sequence may be preset, or the first sequence is indicated by the network device to the terminal device.

For example, in the capability query process of the terminal device, the terminal device sends the band combination information to the first network device in a specific sequence, and each band combination corresponds to a multicast broadcast service capability. The terminal device may send the multicast broadcast service capability by using the first capability information, but does not send the band combination information. In addition, the first capability information carries the second indication information. Content indicated by the second indication information is: multicast broadcast service capabilities sent by the terminal device are in the first sequence. Herein, the first sequence is a sequence of band combinations corresponding to the multicast broadcast service capabilities. In this way, the correspondence between the multicast broadcast service capability and the band combination can be established, and repeated reporting of the band combination information is avoided.

A function of the second indication information in the manner 2 is described by using examples.

Example 1: The first sequence in the second indication information is preset, and the first sequence may be an ascending or descending sequence of band combination identifiers based on ID sizes.

For example, band combination IDs are in an ascending sequence. If IDs of band combinations supported by the terminal device are an ID 1, an ID 2, an ID 3, and an ID 4, band combinations related to the multicast broadcast service are the ID 1 and the ID 3. In this case, the terminal device sends the multicast broadcast service capability information to the first network device in a sequence of the band combinations ID 1 and ID 3. In other words, the terminal device sends a multicast broadcast service capability corresponding to the band combination ID 1, and then sends a multicast broadcast service capability corresponding to the band combination ID 3. In addition, the first capability information may include the second indication information, and the second indication information indicates that the first sequence of the multicast broadcast service capabilities sent by the terminal device is in an ascending sequence of band combination IDs, that is, the band combination ID 1 and the band combination ID 3. Correspondingly, after receiving the second indication information, the network device may learn that received multicast broadcast service capabilities separately correspond to the band combination ID 1 and the band combination ID 3. Therefore, the first sequence is a sequence of band combinations corresponding to the multicast broadcast service capabilities, and the sequence of the band combinations is a sequence of band combination IDs. In this way, the correspondence between the multicast broadcast service capability and the band combination can be established, and repeated sending of band information corresponding to the band combination ID 1 and ID 3 is avoided.

Example 2: The first sequence in the second indication information is indicated by the network device to the terminal device.

If IDs of band combinations supported by the terminal device are an ID 1, an ID 2, an ID 3, an ID 4, an ID 5, and an ID 6, band combinations that are in these band combinations and that are related to the multicast broadcast service are band combinations ID 1, ID 3, and ID 4, the first network device may indicate, by using a message, that a sequence of the band combinations reported by the terminal device and related to the multicast broadcast service is the ID 3, the ID 1, and the ID 4. Under an indication of the first network device, the terminal device reports multicast broadcast service capabilities in a sequence of the band combination ID 3, ID 1, and ID 4. In addition, the terminal device adds the second indication information to the first capability information, the second indication information indicates that the sequence of the multicast broadcast service capabilities reported by the terminal device is the first sequence, and the first sequence is a sequence of band combinations corresponding to the multicast broadcast service capabilities; in other words, the first sequence is the same as a sequence indicated by the first network device by using a first message. Correspondingly, after receiving the second indication information, the network device may learn that the received broadcast multicast capability corresponds to a band combination sequence (the band combination ID 3, ID 1, and ID 4) indicated in the first message. In this way, the correspondence between the multicast broadcast service capability and the band combination can be established, and repeated sending of band information corresponding to the band combination ID 1 and ID 3 is avoided. In addition, in a manner in which the network device indicates the first sequence, capability reporting of the multicast broadcast service can be more flexible.

Optionally, a message that indicates the first sequence for reporting the band combinations may be a radio resource control (radio resource control, RRC) message, downlink control information (downlink control information, DCI), or a medium access control control element (medium access control control element, MAC CE). This is not limited herein.

The first capability information sent by the terminal device may further include the first indication information. In this embodiment of this application, after receiving the first indication information sent by the first network device, the terminal device determines the multicast broadcast service capability based on the first indication information, and further sends the multicast broadcast service capability to the first network device by using the first capability information. The first capability information sent by the terminal device may include the first indication information. In this case, a function of sending the first indication information by the terminal device is to notify the first network device that an indication for requesting the multicast broadcast service capability is received, and in this case, the multicast broadcast service capability included in the first capability information sent by the terminal device is a multicast broadcast service capability requested by the first network device by using the first indication information. This is equivalent to that the first indication information plays an identification role in the first capability information.

In a process in which the first network device queries the capability of the terminal device, the terminal device sends the capability of the terminal device by using terminal capability information. Therefore, the first capability information may also be sent by using the terminal capability information. In this way, the capability of the terminal device and the multicast broadcast service capability may be simultaneously sent by using only one piece of signaling.

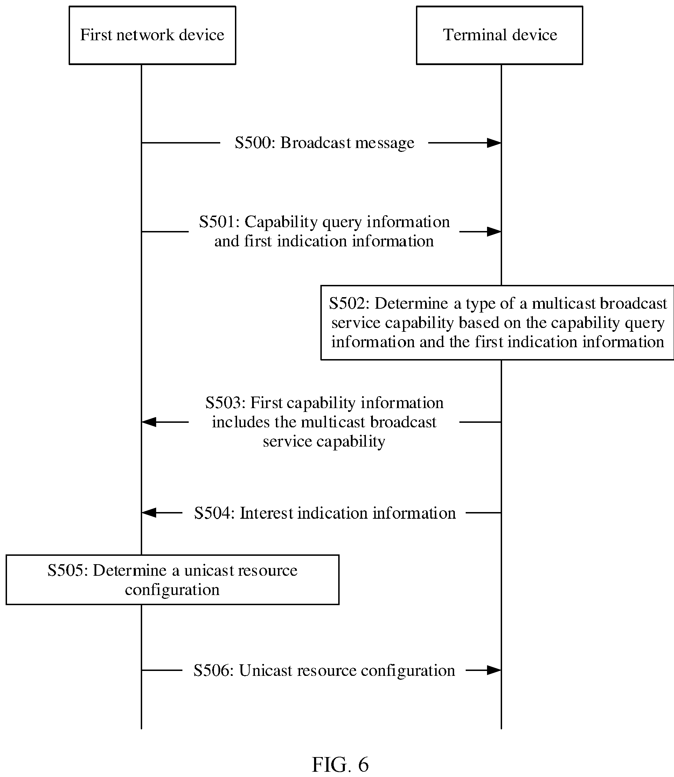

In this embodiment of this application, the first network device may indicate, by using the first indication information and the capability query information, the multicast broadcast service capability to be requested, and the terminal device determines the multicast broadcast service capability based on the first indication information and the capability query information. In this embodiment of this application, the terminal device may determine different types of multicast broadcast service capabilities based on the first indication information and an existing field in the capability query information, so that unnecessary capability information reporting can be avoided. FIG. 6 is a flowchart of still another communication method according to the first embodiment of this application. The communication method includes the following steps.

S500: A terminal device receives a broadcast message sent by a first network device.

The broadcast message includes multicast broadcast service area identities (MBMS Service Area Identities, SAI) at a current carrier frequency and a neighboring cell carrier frequency. For information related to the neighboring cell carrier frequency, the broadcast message includes multicast broadcast service information corresponding to an intra-frequency carrier, such as a SAI identity, and multicast broadcast service information corresponding to an inter-frequency carrier, such as an inter-frequency carrier frequency and a SAI identity corresponding to the frequency.

S501: The first network device sends capability query information and first indication information to the terminal device.

S502: The terminal device determines a type of a multicast broadcast service capability based on the capability query information and the first indication information.

S503: The terminal device sends first capability information to the first network device, where the first capability information includes the multicast broadcast service capability.

S501 to S503 are the same as S501 to S503 corresponding to the implementation in FIG. 5. S504: The terminal device sends interest indication information to the first network device.

The terminal device may send the interest indication information to the first network device based on broadcast information. The interest indication information indicates a multicast broadcast service that is being received by the terminal device or that the terminal device is interested in, or the terminal device indicates, by using the area identity, a multicast broadcast service that the terminal device no longer receives or that the terminal device is not interested in.

The interest indication information includes at least one of the following information: multicast broadcast service frequency information that the terminal device is interested in; priority indication information of a multicast broadcast service, where the priority indication information indicates a priority of the multicast broadcast service and a priority of unicast receiving; and a list of multicast broadcast services that the terminal device is receiving or that the terminal device is interested in.

S504 may be performed before any step in S501 to S503, or may be performed after any step in S501 to S503.

S505: The first network device determines a unicast resource configuration.

The first network device may determine the unicast resource configuration based on the received multicast broadcast service capability or the received interest indication information or based on the multicast broadcast service capability and the interest indication information. Specifically, because the interest indication information indicates a multicast broadcast service that the terminal device is receiving, stops receiving, is interested in, or is not interested in, different multicast broadcast services correspond to different multicast broadcast service capabilities for the terminal device. Therefore, the first network device may learn, based on the interest indication information, a current situation of a multicast broadcast service that the terminal device receives, stops receiving, or is to receive, so that a resource is configured based on a corresponding multicast broadcast service capability, to avoid exceeding a baseband capability of the terminal device. For how to configure a resource based on the multicast broadcast service capability to avoid exceeding the baseband capability of the terminal device, refer to content in S502 in the first embodiment of this application.

S506: The first network device sends a unicast communication resource configuration to the terminal device.

The first network device sends an RRC message to the terminal device, and the RRC message includes the unicast communication resource configuration.

Specifically, the RRC message may be an RRC reconfiguration message or an RRC connection reconfiguration message.

**Second embodiment**

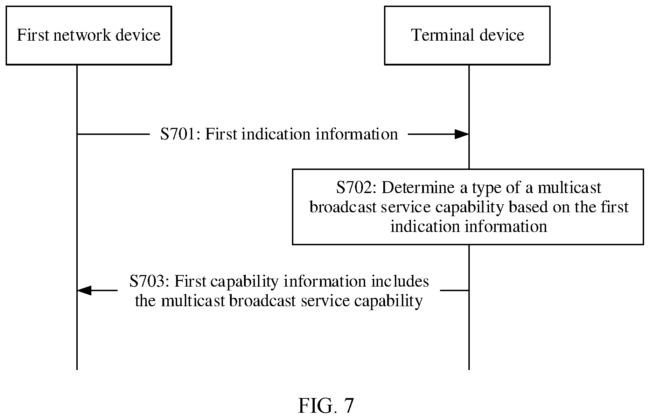

FIG. 7 is a schematic diagram of a communication method according to the second embodiment of this application. The second embodiment of this application is described in detail with reference to FIG. 7. A part that is of the second embodiment and that is same as the first embodiment is not described herein again, and only a difference from the first embodiment is specifically described. As shown in FIG. 7, the method includes the following steps.

S701: A first network device sends first indication information to a terminal device, where the first indication information indicates a type of a multicast broadcast service capability requested by the first network device. The type of the multicast broadcast service capability is multicast broadcast service capabilities corresponding to different band combinations. In other words, the type of the multicast broadcast service capability is classified based on the band combination. In an example, a multicast broadcast service capability corresponding to an NE-DC band combination may be referred to as a first-type multicast broadcast service capability, a multicast broadcast service capability corresponding to an NR-DC band combination may be referred to as a second-type multicast broadcast service capability, a multicast broadcast service capability corresponding to an EN-DC band combination may be referred to as a third-type multicast broadcast service capability, and a multicast broadcast service capability corresponding to a band combination related to a multicast broadcast service is referred to as a fourth-type multicast broadcast service capability.

In S701, the first network device may send the first indication information to the terminal device in a plurality of implementations. In a possible implementation, the first network device may send capability query information to the terminal device, the capability query information may include the first indication information, and the first indication information is sent to the terminal device in the capability query information. In another possible implementation, the first indication information may be included in an information element of the capability query information; or a new information element may be set in the capability query information, and the first indication information is set in the new information element.

The capability query information in this embodiment of this application may include a first information element, and the first information element is used to request a capability of the terminal device. The first information element may be a filtering function, such as UE-Capability Request Filter Common. The filtering function is used to request a filtered capability of the terminal device. Herein, the filtered capability of the terminal device is a capability that is of the terminal device and that meets a requirement of the first network device. In other words, the first network device indicates, by using the first information element, a capability of the terminal device that needs to be reported by the terminal device. Correspondingly, that the terminal device determines, based on the first information element, the capability that is of the terminal device and that needs to be reported may be understood as obtaining the reported capability of the terminal device through filtering. The first indication information may be in the first information element, the first indication information may be a new field in the first information element, and a function of the new field indicates the multicast broadcast service capability to be requested.

The first indication information and the capability query information may alternatively be separately sent, and this is not limited in the second embodiment.

The first network device may indicate, by using the first indication information, the multicast broadcast service capability to be requested, and the multicast broadcast service capability does not need to be indicated jointly by the first indication information and the capability query information. The first indication information may indicate a type of the multicast broadcast service capability.

The first indication information may include a fourth field, and the fourth field is used to request a multicast broadcast service capability corresponding to a band combination related to the multicast broadcast service.

Alternatively, the first indication information may include a fifth field, and the fifth field is used to request a multicast broadcast service capability corresponding to an EN-DC band combination.

Alternatively, the first indication information may include a sixth field, and the sixth field is used to request a multicast broadcast service capability corresponding to an NE-DC band combination.

Alternatively, the first indication information may include a seventh field, and the seventh field is used to request a multicast broadcast service capability corresponding to an NR-DC band combination.

As an example, the fourth field may be, for example, mbmsonly, the fifth field may be, for example, mbmsEN-DC, the sixth field may be, for example, mbmsNE-DC, and the seventh field may be, for example, mbmsNR-DC.

S702: The terminal device determines a type of the multicast broadcast service capability based on the first indication information.

When the first indication information includes the fourth field, the terminal device determines the multicast broadcast service capability based on the fourth field, and the multicast broadcast service capability is the multicast broadcast service capability corresponding to the band combination related to the multicast broadcast service.

In the second embodiment of this application, when the first indication information includes the fourth field, in band combinations supported by the terminal device, all multicast broadcast service capabilities corresponding to the band combination related to the multicast broadcast service are sent to the first network device. Whether the band combination is applicable to an EN-DC mode, an NE-DC mode, or an NR-DC mode is not distinguished. When the first indication information includes the fifth field, the terminal device determines the multicast broadcast service capability based on the fifth field, and the multicast broadcast service capability corresponds to the EN-DC band combination.

When the first indication information includes the sixth field, the terminal device determines the multicast broadcast service capability based on the sixth field, and the multicast broadcast service capability corresponds to the NE-DC band combination.

When the first indication information includes the seventh field, the terminal device determines the multicast broadcast service capability based on the seventh field, and the multicast broadcast service capability corresponds to the NR-DC band combination.

In the second embodiment of this application, the multicast broadcast service capability may also be in a correspondence with the band combination. A meaning of the "correspondence" is the same as that in the first embodiment. Information included in the multicast broadcast service capability may also be the same as that in the first embodiment. Details are not described herein again.

That the terminal device determines different types of multicast broadcast service capabilities based on the first indication information is described below by using some specific examples.

First, how the terminal device determines the multicast broadcast service capability is described by using an example in which the first indication information includes the fourth field and the multicast broadcast service capability includes maximum bandwidth mbms-MaxBW supported for receiving the multicast broadcast service.

Table 5 is an example of the band combination related to the multicast broadcast service in the second embodiment of this application. Band combination types shown in Table 5 include an EN-DC band combination, an NE-DC band combination, and an NR-DC band combination. The EN-DC band combination includes an EN-DC band combination 1 and an EN-DC band combination 2, and the EN-DC band combination 1 corresponds to a multicast broadcast service capability. The NE-DC band combination includes an NE-DC band combination 3 and an NE-DC band combination 4, and the NE-DC band combination 3 and the NE-DC band combination 4 each correspond to a multicast broadcast service capability. The NR-DC band combination includes an NR-DC band combination 5 and an NR-DC band combination 6, and neither the NR-DC band combination 5 nor the NR-DC band combination 6 corresponds to a multicast broadcast service capability. When the first indication information includes the fourth field, the terminal device determines the multicast broadcast service capability based on the fourth field, and the multicast broadcast service capability is the multicast broadcast service capability corresponding to the band combination related to the multicast broadcast service. In this case, multicast broadcast service capabilities that are corresponding to the band combination related to the multicast broadcast service and that are determined by the terminal device include mbms-MaxBW1 corresponding to the EN-DC band combination 1, mbms-MaxBW3 corresponding to the NE-DC band combination 3, and mbms-MaxBW4 corresponding to the NE-DC band combination 4.

**Table 5: Example of the band combination related to the multicast broadcast service**

| Band combination number | Band combination type | Component carrier included in a band combination | Component carrier corresponding to a multicast broadcast service | Multicast broadcast service capability |
|---|---|---|---|---|
| 1 | EN-DC | $CC_1+CC_2$ | $CC_1$ | mbms-MaxBW1 |
| 2 | EN-DC | $CC_1+CC_3+CC_4$ | | Null |
| 3 | NE-DC | $CC_5+CC_7$ | $CC_7$ | mbms-MaxBW3 |
| 4 | NE-DC | $CC_5+CC_6+CC_8$ | $CC_8$ | mbms-MaxBW4 |
| 5 | NR-DC | $CC_9+CC_{10}$ | | Null |
| 6 | NR-DC | $CC_9+CC_{10}+CC_{11}$ | | Null |

A process of determining the multicast broadcast service capability based on the first indication information is described by using an example in which the first indication information includes the fifth field.

Refer to Table 4b in the first embodiment. When the first indication information includes the fifth field, the multicast broadcast service capability determined by the terminal device is also a multicast broadcast service capability corresponding to the EN-DC band combination. Different from the first embodiment, in this case, a band combination that is in the EN-DC combination and that is not related to the multicast broadcast service does not need to be omitted.

In Table 4b, the EN-DC band combination 1 and the EN-DC band combination 2 are related to the multicast broadcast service. Therefore, in both the first embodiment and the second embodiment, the terminal device sends the multicast broadcast service capability corresponding to the EN-DC band combination 1 and the multicast broadcast service capability corresponding to the EN-DC band combination 2 to the first network device. In the first embodiment, the terminal device omits, in a process of determining the multicast broadcast service capability, the EN-DC band combination 3 and the EN-DC band combination 4 that are not related to the multicast broadcast service. In the second embodiment, in the process of determining the multicast broadcast service capability, the terminal device may include the EN-DC band combination 3 and the EN-DC band combination 4, and may also omit the EN-DC band combination 3 and the EN-DC band combination 4. When the EN-DC band combination 3 and the EN-DC band combination 4 are included, multicast broadcast service capabilities corresponding to both the EN-DC band combination 3 and the EN-DC band combination 4 determined by the terminal device are "null".

A process of determining the multicast broadcast service capability based on the first indication information is described by using an example in which the first indication information includes the sixth field.

Also refer to Table 3. There are four band combinations applicable to an NE-DC mode. A second column in Table 3 is band combination information of the NE-DC band combination, such as information about a component carrier included in the NE-DC band combination. A third column in Table 3 is information about whether the band combination is related to the multicast broadcast service. A fourth column in Table 3 is information about the multicast broadcast service capability corresponding to the band combination.

The NE-DC band combination 1, the NE-DC band combination 2, and the NE-DC band combination 4 are related to the multicast broadcast service, and the NE-DC band combination 1, the NE-DC band combination 2, and the NE-DC band combination 4 each correspond to a multicast broadcast service capability. For example, the multicast broadcast service capability is the maximum bandwidth mbms-MaxBW supported for receiving the multicast broadcast service. A multicast broadcast service capability corresponding to the NE-DC band combination 1 is mbms-MaxBW1, a multicast broadcast service capability corresponding to the NE-DC band combination 2 is mbms-MaxBW2, and a multicast broadcast service capability corresponding to the NE-DC band combination 4 is mbms-MaxBW4. The terminal device may further determine, based on the first indication information, that the multicast broadcast service capability corresponding to the NE-DC band combination 3 is null.

A process of determining the multicast broadcast service capability based on the first indication information is described by using an example in which the first indication information includes the seventh field.

Similar to the case in which the first indication information includes the sixth field, the terminal device determines the multicast broadcast service capability based on the seventh field, and the multicast broadcast service capability corresponds to the NR-DC band combination. Still as an example, there are four band combinations applicable to the NR-DC mode. The NR-DC band combination 2, the NR-DC band combination 3, and the NR-DC band combination 4 are related to the multicast broadcast service, and the NR-DC band combination 2, the NR-DC band combination 3, and the NR-DC band combination 4 each correspond to a multicast broadcast service capability. The multicast broadcast service capability corresponding to the NR-DC band combination 2 is mbms-MaxBW2, the multicast broadcast service capability corresponding to the NR-DC band combination 3 is mbms-MaxBW3, and the multicast broadcast service capability corresponding to the NR-DC band combination 4 is mbms-MaxBW4. The terminal device may further determine, based on the seventh field, that the multicast broadcast service capability corresponding to the NR-DC band combination 1 is null.

S703: The terminal device sends first capability information to the first network device, where the first capability information includes the multicast broadcast service capability.

For specific content of S603 in the second embodiment, refer to S503 in the first embodiment. Details are not described herein again.

In this embodiment of this application, the terminal device may determine different types of multicast broadcast service capabilities based on the first indication information, and the terminal device can determine a corresponding type of multicast broadcast service capability by setting different fields in the first indication information, and send the multicast broadcast service capability to the first network device, to avoid unnecessary capability information reporting.

Same as the first embodiment, in the second embodiment, the method may also include the following step: The first network device sends a broadcast message to the terminal device. This step is the same as step S500, and details are not described herein again.

Same as the first embodiment, in the second embodiment, the method may also include the following step: The terminal device sends interest indication information to the first network device. This step is the same as step S504, and details are not described herein again.

Same as the first embodiment, in the second embodiment, the method may also include step: The first network device determines a unicast resource configuration. This step is the same as step S505, and details are not described herein again.

**Third embodiment**

In the third embodiment of this application, that the multicast broadcast service capability is a capability of further receiving the multicast broadcast service from the second network device in a ROM mode while performing the unicast operation with the first network device in the first embodiment and the second embodiment is specially described.

The capability of receiving the multicast broadcast service from the second network device in the ROM means that the terminal device is allowed to receive the multicast broadcast service only from the second network device, and does not need to access or register with a PLMN that provides the multicast broadcast service.

In the third embodiment of this application, the terminal device may simultaneously communicate with the first network device and the second network device. The terminal device performs the unicast operation with the first network device, and may simultaneously receive the multicast broadcast service from the second network device in the ROM mode. In this case, the network device that sends the first indication information may be the first network device. A network device that performs unicast communication with the terminal device and a network device that performs multicast broadcast service communication with the terminal device may alternatively be a same network device. When a CU-DU structure is used, the first network device and the second network device may be CU nodes, DU nodes, or RAN devices including the CU node and the DU node.

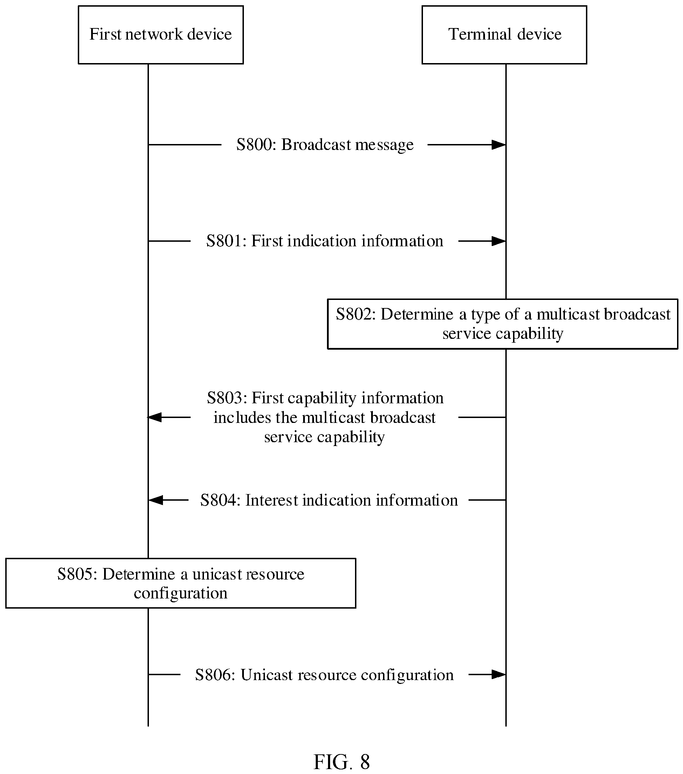

FIG. 8 is a flowchart of a communication method according to the third embodiment of this application. The method includes the following steps.

S800: A terminal device receives a broadcast message sent by a first network device.

The broadcast message includes multicast broadcast service area identities (MBMS Service Area Identities, SAI) at a current carrier frequency and a neighboring cell carrier frequency. For information related to the neighboring cell carrier frequency, the broadcast message includes multicast broadcast service information corresponding to an intra-frequency carrier, such as a SAI identity, and multicast broadcast service information corresponding to an inter-frequency carrier, such as an inter-frequency carrier frequency and a SAI identity corresponding to the frequency. In addition, the broadcast message further includes indication information, and the indication information indicates whether to allow the terminal device to send interest indication information when a service is provided only in a receive only mode (ROM).

S801: The terminal device receives first indication information sent by the first network device, where the first indication information is used to request a multicast broadcast service capability, and the multicast broadcast service capability is a capability of further receiving a multicast broadcast service from the second network device in a ROM mode while performing a unicast operation with the first network device.

S801 may be the same as step S501 in the first embodiment of this application, or may be the same as step S701 in the second embodiment of this application.

S802: The terminal device determines a type of the multicast broadcast service capability.

In step S802 in the third embodiment, a manner in which the terminal device determines the type of the multicast broadcast service capability may be: determining the multicast broadcast service capability jointly based on the first indication information and the capability query information in the first embodiment of this application; or determining the multicast broadcast service capability only based on the first indication information in the second embodiment of this application.

S803: The terminal device sends first capability information to the first network device, where the first capability information includes the multicast broadcast service capability.

S803 may be the same as step S503 in the first embodiment of this application, or may be the same as step S703 in the second embodiment of this application.

S804: The terminal device sends interest indication information to the first network device.

The interest indication information includes: related information of the multicast broadcast service received in the ROM mode. The related information of the multicast broadcast service received in the ROM mode includes: mbms-ROM-Freq, mbms-ROM-SubcarrierSpacing, and mbms-ROM-Bandwidth, where mbms-ROM-Freq indicates carrier frequency information used by the terminal device in the ROM mode, mbms-ROM-SubcarrierSpacing indicates subcarrier spacing information used by the terminal device in the ROM mode, and mbms-ROM-Bandwidth indicates bandwidth information used by the terminal device in the ROM mode.

S804 may be performed before any step in steps S801 to S803, or may be performed after any step in steps S801 to S803.

S805: Determine a unicast resource configuration.

The first network device may determine the unicast resource configuration based on the received multicast broadcast service capability or the received interest indication information or based on the multicast broadcast service capability and the interest indication information. Specifically, because the interest indication information indicates a multicast broadcast service that the terminal device is receiving, stops receiving, is interested in, or is not interested in, different multicast broadcast services correspond to different multicast broadcast service capabilities for the terminal device. Therefore, the first network device may learn, based on the interest indication information, a current situation of a multicast broadcast service that the terminal device receives, stops receiving, or is to receive, so that a resource is configured based on a corresponding multicast broadcast service capability, to avoid exceeding a baseband capability of the terminal device. For how to configure a resource based on the multicast broadcast service capability to avoid exceeding the baseband capability of the terminal device, refer to content in S502 in the first embodiment of this application.

S806: The first network device sends a unicast communication resource configuration to the terminal device.

The first network device sends an RRC message to the terminal device, and the RRC message includes the unicast communication resource configuration.

Specifically, the RRC message may be an RRC reconfiguration message or an RRC connection reconfiguration message.

The communication methods in embodiments of this application are described above, and a communication apparatus in embodiments of this application is described below. For example, the apparatus may use the methods shown in the first embodiment, the second embodiment, and the third embodiment. The apparatus is based on a same technical concept. Because problem resolving principles of the method and the apparatus are similar, for implementation of the apparatus and the method, refer to each other. Repeated parts are not described again.

An embodiment of this application further provides a communication apparatus, and the communication apparatus includes: a transceiver module, configured to receive first indication information, where the first indication information is used to request a multicast broadcast service capability; and

a processing module, configured to determine first capability information based on the first indication information, where the first capability information includes the multicast broadcast service capability.

The multicast broadcast service capability is a capability of further receiving a multicast broadcast service while performing a unicast operation.

The transceiver module is further configured to send the first capability information.

The communication apparatus provided in this embodiment of this application may be a terminal device. A capability of the communication apparatus in this embodiment of this application may be the capability of the terminal device in the method embodiments. The terminal device reports the multicast broadcast service capability according to an indication of a first network device, to avoid unnecessary capability information reporting of the terminal device. The first network device may configure a unicast resource based on the multicast broadcast service capability reported by the terminal device, so that the terminal device can further receive the multicast broadcast service while performing the unicast operation, and this does not exceed a baseband capability of the terminal device. The communication apparatus provided in this embodiment may be further configured to perform the method in any possible implementation of the method embodiments. For specific content, refer to some content of actions performed by the terminal device in the method embodiments. Details are not described herein again.

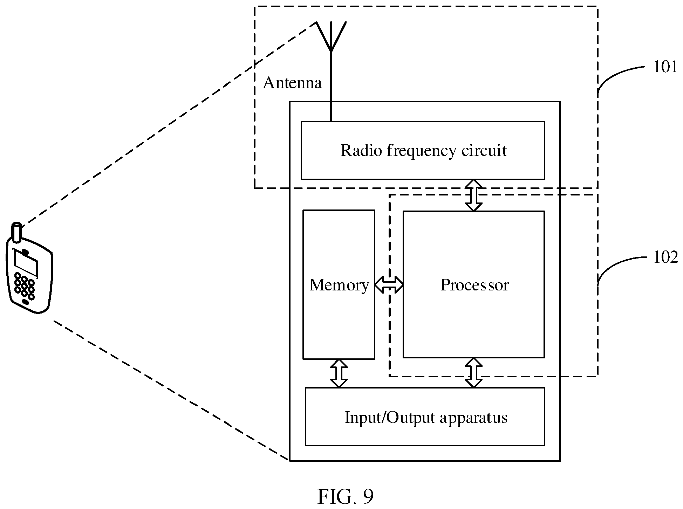

FIG. 9 is a schematic diagram of a simplified structure of a communication apparatus. As shown in FIG. 9, the communication apparatus includes a processor, a memory, a radio frequency circuit, an antenna, and an input/output apparatus. The processor is mainly configured to: process a communication protocol and communication data, control a terminal device, execute a software program, process data of the software program, and the like. The memory is mainly configured to store the software program and data. The radio frequency circuit is mainly configured to perform conversion between a baseband signal and a radio frequency signal and process the radio frequency signal. The antenna is mainly configured to receive and send a radio frequency signal in a form of an electromagnetic wave. The input/output apparatus, for example, a touchscreen, a display, or a keyboard, is mainly configured to receive data entered by a user and output data to the user. It should be noted that some types of communication apparatuses may not have the input/output apparatus.

When data needs to be sent, the processor performs baseband processing on the to-be-sent data, and then outputs a baseband signal to the radio frequency circuit. The radio frequency circuit performs radio frequency processing on the baseband signal and then sends a radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor, and the processor converts the baseband signal into data and processes the data. For ease of description, only one memory and one processor are shown in FIG. 3. An actual terminal device product may include one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit with a receiving/transmitting function may be considered as a transceiver module of the communication apparatus, and the processor with a processing function is considered as a processing module of the communication apparatus. As shown in FIG. 9, the communication apparatus includes a transceiver module 101 and a processing module 102. The transceiver module may also be referred to as a transceiver, a transceiver apparatus, or the like. The processing module may also be referred to as a processor, a processing board, a processing apparatus, or the like. Optionally, a component used to implement a receiving function in the transceiver module 101 may be considered as a receiving module, and a component used to implement a sending function in the transceiver module 101 may be considered as a sending module; in other words, the transceiver module 101 includes the receiving module and the sending module. The transceiver module may sometimes be referred to as a transceiver, a transceiver circuit, or the like. The receiving module may sometimes be referred to as a receiver, a receiving circuit, or the like. The sending module may sometimes be referred to as a transmitter, a transmitting circuit, or the like.

It should be understood that the transceiver module 101 is configured to perform a sending operation and a receiving operation on a terminal device side in the foregoing method embodiments, and the processing module 102 is configured to perform other operations other than the receiving/transmitting operation on the terminal device in the foregoing method embodiments.

When the communication apparatus is a chip-type apparatus or a circuit, the chip apparatus may include a transceiver module and a processing module. The transceiver module may be an input/output circuit and/or a communication interface. The processing module is a processor, a microprocessor, or an integrated circuit integrated on the chip.

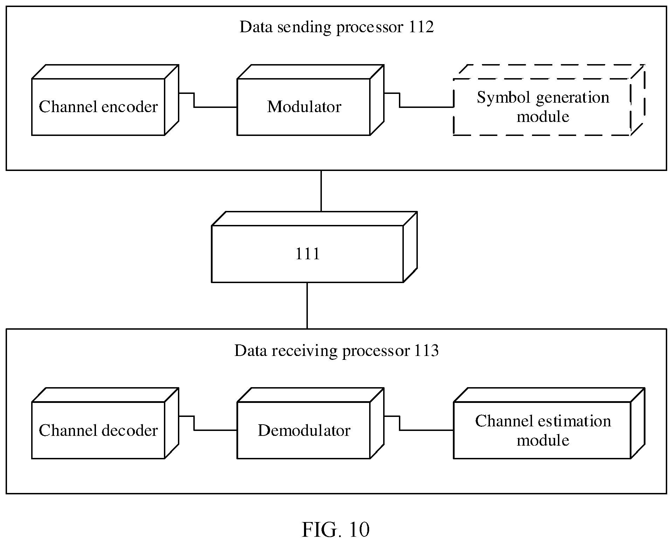

The communication apparatus in this embodiment may alternatively be a device shown in FIG. 10. In

FIG. 10, the device includes a processor 111, a data sending processor 112, and a data receiving processor 113. The processing module in the foregoing embodiment may be the processor 111 in FIG. 10, and implements a corresponding function. The transceiver module in the foregoing embodiment may be the data sending processor 112 and/or the data receiving processor 113 in FIG. 10. Although FIG. 10 shows a channel encoder and a channel decoder, it may be understood that these modules do not constitute a limiting description of this embodiment, but are merely examples.

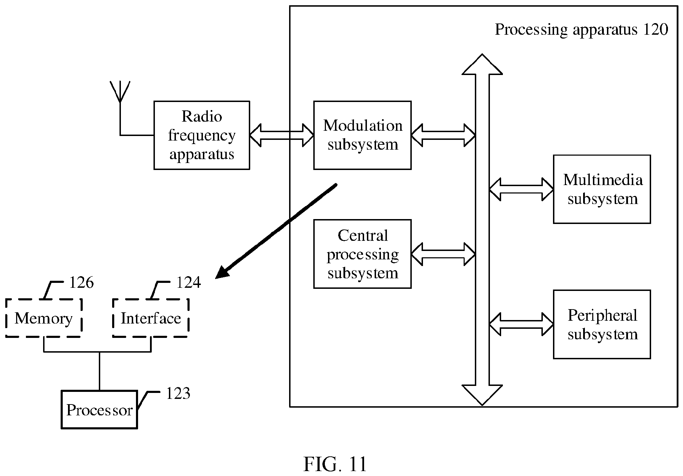

FIG. 11 shows another form of this embodiment. A processing apparatus 120 includes modules such as a modulation subsystem, a central processing subsystem, and a peripheral subsystem. The communication apparatus in this embodiment may be used as the modulation subsystem. Specifically, the modulation subsystem may include a processor 123 and an interface 124. The processor 123 completes a function of the foregoing processing module, and the interface 124 completes a function of the foregoing transceiver module. In another variant, the modulation subsystem includes a memory 126, a processor 123, and a program that is stored in the memory 126 and that can run on the processor. When executing the program, the processor 123 implements the method on the terminal device side in the foregoing method embodiments. It should be noted that the memory 126 may be non-volatile or may be volatile, and the memory 126 may be located in the modulation subsystem, or may be located in the processing apparatus 120, provided that the memory 126 may be connected to the processor 123.

An embodiment of this application further provides a communication apparatus, and the communication apparatus includes: a processing module, configured to determine first indication information; and
a transceiver module, configured to send the first indication information, where the first indication information is used to request a multicast broadcast service capability.

The multicast broadcast service capability is a capability that the terminal device further receives a multicast broadcast service while performing a unicast operation.

The transceiver module is configured to receive first capability information, and the first capability information includes the multicast broadcast service capability.

The communication apparatus in this embodiment of this application may be a first network device. The first network device indicates the terminal device to report the multicast broadcast service capability, and the first network device may configure a unicast resource based on the multicast broadcast service capability reported by the terminal device.

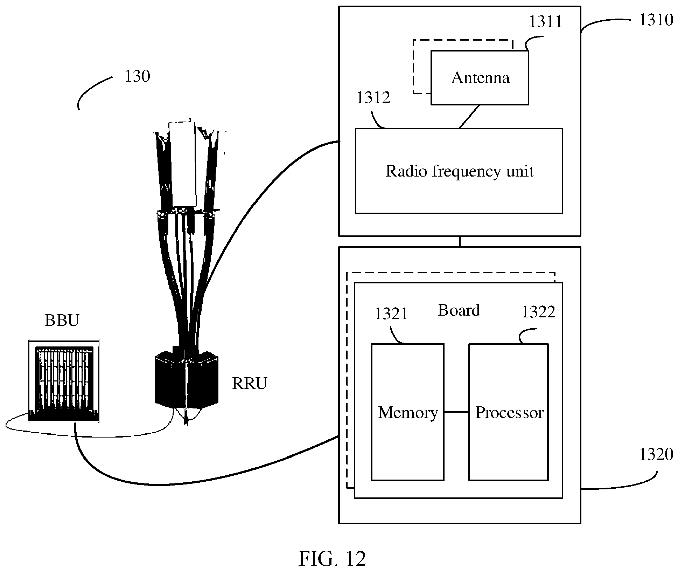

The communication apparatus in this embodiment may be shown in FIG. 12. An apparatus 130 includes one or more radio frequency units, such as a remote radio unit (remote radio unit, RRU) 1310 and one or more baseband units 1320 (baseband unit, BBU) that may also be referred to as a digital unit (digital unit, DU). The RRU 1310 may be referred to as a transceiver module. Optionally, the transceiver module may also be referred to as a transceiver, a transceiver circuit, or the like, and may include at least one antenna 1311 and a radio frequency unit 1312. The RRU 1310 is mainly configured to send and receive a radio frequency signal and convert the radio frequency signal and a baseband signal, for example, is configured to send indication information to a terminal device. The BBU 1310 is mainly configured to perform baseband processing, control a base station, and the like. The RRU 1310 and the BBU 1320 may be physically disposed together, or may be physically disposed separately, that is, a distributed base station.

The BBU 1320 is a control center of the base station, may also be referred to as a processing module, and is mainly configured to implement a baseband processing function, such as channel encoding, multiplexing, modulation, and spreading. For example, the BBU (processing module) may be configured to control the base station to perform an operation procedure of the network device in the foregoing method embodiments, for example, generate the foregoing indication information.

In an example, the BBU 1320 may include one or more boards. A plurality of boards may jointly support a radio access network of a single access standard, or may separately support radio access networks (such as an LTE network, a 5G network, or another network) of different access standards. The BBU 1320 further includes a memory 1321 and a processor 1322. The memory 1321 is configured to store necessary instructions and data. The processor 1322 is configured to control the base station to perform a necessary action, for example, is configured to control the base station to perform an operation procedure of the network device in the foregoing method embodiments. The memory 1321 and the processor 1322 may serve one or more boards. In other words, a memory and a processor may be deployed on each board. Alternatively, a plurality of boards may share a same memory and a same processor. In addition, a necessary circuit may be further disposed on each board.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

receiving first indication information, wherein the first indication information is used to request a multicast broadcast service capability;

determining first capability information based on the first indication information, wherein the first capability information comprises the multicast broadcast service capability, and

the multicast broadcast service capability is a capability of further receiving a multicast broadcast service while performing a unicast operation; and

sending the first capability information.

2. The method according to claim 1, wherein
the multicast broadcast service capability is a capability of further receiving the multicast broadcast service from a second network device while performing the unicast operation with a first network device.

3. The method according to claim 2, wherein
the multicast broadcast service capability is a capability of further receiving the multicast broadcast service from the second network device in a ROM manner while performing the unicast operation with the first network device.

4. The method according to any one of claims 1 to 3, comprising:

receiving capability query information, wherein the capability query information is used to request a capability of a terminal device, and

the capability query information comprises the first indication information.

5. The method according to claim 4, wherein

the capability query information comprises a first information element, the first information element is used to request a filtered capability of the terminal device, and

the first information element comprises the first indication information.

6. The method according to claim 4 or 5, wherein
the determining first capability information based on the first indication information comprises: determining the multicast broadcast service capability based on the first indication information and the capability query information.

7. The method according to any one of claims 4 to 6, wherein the determining first capability information based on the first indication information comprises:

when the capability query information comprises a first field, determining the multicast broadcast service capability based on the first indication information and the first field, wherein the multicast broadcast service capability corresponds to an NE-DC band combination;

when the capability query information comprises a second field, determining the multicast broadcast service capability based on the first indication information and the second field, wherein the multicast broadcast service capability corresponds to an NR-DC band combination; and

when the capability query information comprises a third field, determining the multicast broadcast service capability based on the first indication information and the third field, wherein the multicast broadcast service capability corresponds to an EN-DC band combination, and omitting a band combination that is in the EN-DC band combination and that is not related to the multicast broadcast service.

8. The method according to any one of claims 1 to 5, wherein the determining first capability information based on the first indication information comprises:

when the first indication information comprises a fourth field, determining the multicast broadcast service capability based on the fourth field, wherein the multicast broadcast service capability corresponds to a band combination, and the band combination is related to the multicast broadcast service;

when the first indication information comprises a fifth field, determining the multicast broadcast service capability based on the fifth field, wherein the multicast broadcast service capability corresponds to an EN-DC band combination;

when the first indication information comprises a sixth field, determining the multicast broadcast service capability based on the sixth field, wherein the multicast broadcast service capability corresponds to an NE-DC band combination; and

when the first indication information comprises a seventh field, determining the multicast broadcast service capability based on the seventh field, wherein the multicast broadcast service capability corresponds to an NR-DC band combination.

9.  The method according to any one of claims 1 to 8, wherein
    the multicast broadcast service capability comprises at least one of the following:

    information indicating whether further receiving the multicast broadcast service while performing the unicast operation is supported;
    maximum bandwidth supported for receiving the multicast broadcast service;
    a scaling factor of the multicast broadcast service, wherein the scaling factor is a ratio factor of one bandwidth unit for processing a first subcarrier spacing to one bandwidth unit for processing a default subcarrier spacing, and the first subcarrier spacing corresponds to the multicast broadcast service;
    information indicating whether receiving of the multicast broadcast service at a frequency of a secondary cell is supported; and
    information indicating whether receiving of the multicast broadcast service at a frequency of a serving cell is supported, wherein the serving cell is in a master cell group or a secondary cell group.

10. The method according to any one of claims 1 to 9, wherein
    the first capability information further comprises band combination information, and the band combination information indicates a band combination in which the multicast broadcast service is further received while the unicast operation is performed.

11. The method according to claim 10, wherein

    the band combination information comprises at least one of the following: a quantity of band combinations, a carrier component comprised in the band combination, or a feature set combination corresponding to the band combination; or
    the band combination information comprises second indication information, and the second indication information indicates that the multicast broadcast service capability is sent in a first sequence.

12. The method according to any one of claims 1 to 11, wherein the sending the first capability information comprises:

    sending terminal capability information, wherein the terminal capability information comprises the capability of the terminal device, and
    the terminal capability information comprises the first capability information.

13. The method according to any one of claims 1 to 12, wherein
    the first capability information comprises the first indication information.

14. The method according to any one of claims 1 to 13, wherein
    the multicast broadcast service capability corresponds to the band combination.

15. The method according to claim 14, wherein
    the band combination comprises at least one of the following: the EN-DC band combination, the NE-DC band combination, the NR-DC band combination, an MR-DC band combination, or a CA band combination.

16. A communication method, comprising:

    sending, by a first network device, first indication information, wherein the first indication information is used to request a multicast broadcast service capability, wherein
    the multicast broadcast service capability is a capability that a terminal device further receives a multicast broadcast service while performing a unicast operation; and
    receiving first capability information, wherein the first capability information comprises the multicast broadcast service capability.

17. The method according to claim 16, wherein
    the multicast broadcast service capability is a capability that the terminal device further receives the multicast broadcast service from a second network device while performing the unicast operation with the first network device.

18. The method according to claim 17, wherein
the multicast broadcast service capability is a capability that the terminal device further receives the multicast broadcast service from the second network device in a ROM manner while performing the unicast operation with the first network device.

19. The method according to any one of claims 16 to 18, wherein

   sending capability query information, wherein the capability query information is used to request a capability of the terminal device, and
   the capability query information comprises the first indication information.

20. The method according to claim 19, wherein

   the capability query information comprises a first information element, the first information element is used to request a filtered capability of the terminal device, and
   the first information element comprises the first indication information.

21. The method according to claim 19 or 20, wherein
the first indication information and the capability query information indicate the requested multicast broadcast service capability.

22. The method according to any one of claims 19 to 21, wherein

   when the capability query information comprises a first field, the first indication information and the first field are used to request a multicast broadcast service capability corresponding to an NE-DC band combination;
   when the capability query information comprises a second field, the first indication information and the second field are used to request a multicast broadcast service capability corresponding to an NR-DC band combination; and
   when the capability query information comprises a third field, the first indication information and the third field are used to request a multicast broadcast service capability corresponding to an EN-DC band combination, and the first indication information and the third field indicate to omit a band combination that is in the EN-DC band combination and that is not related to the multicast broadcast service.

23. The method according to any one of claims 16 to 20, wherein

   the first indication information comprises a fourth field, and the fourth field is used to request a multicast broadcast service capability corresponding to a band combination related to the multicast broadcast service;
   the first indication information comprises a fifth field, and the fifth field is used to request a multicast broadcast service capability corresponding to an EN-DC band combination;
   the first indication information comprises a sixth field, and the sixth field is used to request a multicast broadcast service capability corresponding to an NE-DC band combination; or
   the first indication information comprises a seventh field, and the seventh field is used to request a multicast broadcast service capability corresponding to an NR-DC band combination.

24. The method according to any one of claims 16 to 23, wherein
the multicast broadcast service capability comprises at least one of the following:

   information indicating whether further receiving the multicast broadcast service while performing the unicast operation is supported;
   maximum bandwidth supported for receiving the multicast broadcast service;
   a scaling factor of the multicast broadcast service, wherein the scaling factor is a ratio factor of one bandwidth unit for processing a first subcarrier spacing to one bandwidth unit for processing a default subcarrier spacing, and the first subcarrier spacing corresponds to the multicast broadcast service;
   information indicating whether receiving of the multicast broadcast service at a frequency of a secondary cell is supported; and
   information indicating whether receiving of the multicast broadcast service at a frequency of a serving cell is supported, wherein the serving cell is in a master cell group or a secondary cell group.

25. The method according to any one of claims 16 to 24, wherein
the first capability information further comprises band combination information, and the band combination information indicates a band combination in which the multicast broadcast service is further received while the unicast operation is performed.

26. The method according to claim 25, wherein

the band combination information comprises at least one of the following: a quantity of band combinations, a carrier component comprised in the band combination, or a feature set combination corresponding to the band combination; or
the band combination information comprises second indication information, and the second indication information indicates that the multicast broadcast service capability is sent in a first sequence.

27. The method according to any one of claims 16 to 26, wherein the receiving first capability information comprises:

receiving terminal capability information, wherein the terminal capability information comprises the capability of the terminal device, and
the terminal capability information comprises the first capability information.

28. The method according to any one of claims 16 to 27, wherein
the first capability information comprises the first indication information.

29. The method according to any one of claims 16 to 28, wherein
the multicast broadcast service capability corresponds to the band combination.

30. The method according to claim 29, wherein
the band combination comprises the EN-DC band combination, the NE-DC band combination, the NR-DC band combination, an MR-DC band combination, or a CA band combination.

31. A communication apparatus, comprising:

a transceiver module, configured to receive first indication information, wherein the first indication information is used to request a multicast broadcast service capability; and
a processing module, configured to determine first capability information based on the first indication information, wherein the first capability information comprises the multicast broadcast service capability, and
the multicast broadcast service capability is a capability of further receiving a multicast broadcast service while performing a unicast operation; and
the transceiver module is further configured to send the first capability information.

32. The communication apparatus according to claim 31, wherein
the multicast broadcast service capability is a capability of further receiving the multicast broadcast service from a second network device while performing the unicast operation with a first network device.

33. The communication apparatus according to claim 32, wherein
the multicast broadcast service capability is a capability of further receiving the multicast broadcast service from the second network device in a ROM manner while performing the unicast operation with the first network device.

34. The communication apparatus according to any one of claims 31 to 33, wherein the transceiver module is configured to: receive capability query information, wherein the capability query information is used to request a capability of the communication apparatus, and
the capability query information comprises the first indication information.

35. The communication apparatus according to claim 34, wherein
the capability query information comprises a first information element, the first information element is used to request a filtered capability of the communication apparatus, and
the first information element comprises the first indication information.

**36.** The communication apparatus according to claim 34 or 35, wherein
that the processing module is configured to determine first capability information based on the first indication information comprises: the processing module is configured to determine the multicast broadcast service capability based on the first indication information and the capability query information.

**37.** The communication apparatus according to any one of claims 34 to 36, wherein that the processing module is configured to determine first capability information based on the first indication information comprises:

when the capability query information comprises a first field, the processing module is configured to determine the multicast broadcast service capability based on the first indication information and the first field, wherein the multicast broadcast service capability corresponds to an NE-DC band combination;
when the capability query information comprises a second field, the processing module is configured to determine the multicast broadcast service capability based on the first indication information and the second field, wherein the multicast broadcast service capability corresponds to an NR-DC band combination; and
when the capability query information comprises a third field, the processing module is configured to: determine the multicast broadcast service capability based on the first indication information and the third field, wherein the multicast broadcast service capability corresponds to an EN-DC band combination, and omit a band combination that is in the EN-DC band combination and that is not related to the multicast broadcast service.

**38.** The communication apparatus according to any one of claims 31 to 35, wherein that the processing module is configured to determine first capability information based on the first indication information comprises:

when the first indication information comprises a fourth field, the processing module is configured to determine the multicast broadcast service capability based on the fourth field, the multicast broadcast service capability corresponds to a band combination, and the band combination is related to the multicast broadcast service;
when the first indication information comprises a fifth field, the processing module is configured to determine the multicast broadcast service capability based on the fifth field, wherein the multicast broadcast service capability corresponds to an EN-DC band combination;
when the first indication information comprises a sixth field, the processing module is configured to determine the multicast broadcast service capability based on the sixth field, wherein the multicast broadcast service capability corresponds to an NE-DC band combination; and
when the first indication information comprises a seventh field, the processing module is configured to determine the multicast broadcast service capability based on the seventh field, wherein the multicast broadcast service capability corresponds to an NR-DC band combination.

**39.** The communication apparatus according to any one of claims 31 to 38, wherein
the multicast broadcast service capability comprises at least one of the following:

information indicating whether further receiving the multicast broadcast service while performing the unicast operation is supported;
maximum bandwidth supported for receiving the multicast broadcast service;
a scaling factor of the multicast broadcast service, wherein the scaling factor is a ratio factor of one bandwidth unit for processing a first subcarrier spacing to one bandwidth unit for processing a default subcarrier spacing, and the first subcarrier spacing corresponds to the multicast broadcast service;
information indicating whether receiving of the multicast broadcast service at a frequency of a secondary cell is supported; and
information indicating whether receiving of the multicast broadcast service at a frequency of a serving cell is supported, wherein the serving cell is in a master cell group or a secondary cell group.

**40.** The communication apparatus according to any one of claims 31 to 39, wherein

the first capability information further comprises band combination information, and
the band combination information indicates a band combination in which the multicast broadcast service is further received while the unicast operation is performed.

**41.** The communication apparatus according to claim 40, wherein

the band combination information comprises at least one of the following: a quantity of band combinations, a carrier component comprised in the band combination, or a feature set combination corresponding to the band combination; or

the band combination information comprises second indication information, and the second indication information indicates that the multicast broadcast service capability is sent in a first sequence.

42. The communication apparatus according to any one of claims 31 to 41, wherein that the transceiver module is configured to send the first capability information comprises:

a transceiver module, configured to send communication apparatus capability information, wherein the communication apparatus capability information comprises the capability of the communication apparatus, and the communication apparatus capability information comprises the first capability information.

43. The communication apparatus according to any one of claims 31 to 42, wherein
the first capability information comprises the first indication information.

44. The communication apparatus according to any one of claims 31 to 43, wherein
the multicast broadcast service capability corresponds to the band combination.

45. The communication apparatus according to claim 44, wherein
the band combination comprises the EN-DC band combination, the NE-DC band combination, the NR-DC band combination, an MR-DC band combination, or a CA band combination.

46. A communication apparatus, comprising:

a processing module, configured to determine first indication information; and
a transceiver module, configured to send the first indication information, wherein the first indication information is used to request a multicast broadcast service capability, wherein
the multicast broadcast service capability is a capability that a terminal device further receives a multicast broadcast service while performing a unicast operation; and
the transceiver module is configured to receive first capability information, and the first capability information comprises the multicast broadcast service capability.

47. The communication apparatus according to claim 46, wherein
the multicast broadcast service capability is a capability that the terminal device further receives the multicast broadcast service from a second network device while performing the unicast operation with a first network device.

48. The communication apparatus according to claim 47, wherein
the multicast broadcast service capability is a capability that the terminal device further receives the multicast broadcast service from the second network device in a ROM manner while performing the unicast operation with the network device.

49. The communication apparatus according to any one of claims 46 to 48, wherein

the transceiver module is configured to send capability query information, wherein the capability query information is used to request a capability of the terminal device, and
the capability query information comprises the first indication information.

50. The communication apparatus according to claim 49, wherein

the capability query information comprises a first information element, the first information element is used to request a filtered capability of the terminal device, and
the first information element comprises the first indication information.

51. The communication apparatus according to claim 49 or 50, wherein
the first indication information and the capability query information indicate the requested multicast broadcast service capability.

52. The communication apparatus according to any one of claims 49 to 51, wherein

when the capability query information comprises a first field, the first indication information and the first field are used to request a multicast broadcast service capability corresponding to an NE-DC band combination;

when the capability query information comprises a second field, the first indication information and the second field are used to request a multicast broadcast service capability corresponding to an NR-DC band combination; and

when the capability query information comprises a third field, the first indication information and the third field are used to request a multicast broadcast service capability corresponding to an EN-DC band combination, and indicate to omit a band combination that is in the EN-DC band combination and that is not related to the multicast broadcast service.

53. The communication apparatus according to any one of claims 46 to 50, wherein

the first indication information comprises a first field, and the first field is used to request a multicast broadcast service capability corresponding to a band combination related to the multicast broadcast service;

the first indication information comprises a second field, and the second field is used to request a multicast broadcast service capability corresponding to an EN-DC band combination, and indicate to omit a band combination that is in the EN-DC band combination and that is not related to the multicast broadcast service; or the first indication information comprises a third field, and the third field is used to request a multicast broadcast service capability corresponding to an NE-DC band combination; or the first indication information comprises a fourth field, and the fourth field is used to request a multicast broadcast service capability corresponding to an NR-DC band combination.

54. The communication apparatus according to any one of claims 46 to 53, wherein the multicast broadcast service capability comprises at least one of the following:

information indicating whether further receiving the multicast broadcast service while performing the unicast operation is supported;

maximum bandwidth supported for receiving the multicast broadcast service;

a scaling factor of the multicast broadcast service, wherein the scaling factor is a ratio factor of one bandwidth unit for processing a first subcarrier spacing to one bandwidth unit for processing a default subcarrier spacing, and the first subcarrier spacing corresponds to the multicast broadcast service;

information indicating whether receiving of the multicast broadcast service at a frequency of a secondary cell is supported; and

information indicating whether receiving of the multicast broadcast service at a frequency of a serving cell is supported, wherein the serving cell is in a master cell group or a secondary cell group.

55. The communication apparatus according to any one of claims 46 to 54, wherein

the first capability information further comprises band combination information, and

the band combination information indicates a band combination in which the multicast broadcast service is further received while the unicast operation is performed.

56. The communication apparatus according to any one of claims 46 to 55, wherein

the band combination information comprises at least one of the following: a quantity of band combinations, a carrier component comprised in the band combination, or a feature set combination corresponding to the band combination; or

the band combination information comprises second indication information, and the second indication information indicates that the multicast broadcast service capability is sent in a first sequence.

57. The communication apparatus according to any one of claims 46 to 56, wherein that the transceiver module is configured to receive first capability information comprises:

the transceiver module is configured to receive terminal capability information, wherein the terminal capability information comprises the capability of the terminal device, and

the terminal capability information comprises the first capability information.

**58.** The communication apparatus according to any one of claims 46 to 57, wherein
the first capability information comprises the first indication information.

**59.** The communication apparatus according to any one of claims 46 to 58, wherein
the multicast broadcast service capability corresponds to the band combination.

**60.** The communication apparatus according to claim 59, wherein
the band combination comprises the EN-DC band combination, the NE-DC band combination, the NR-DC band combination, an MR-DC band combination, or a CA band combination.

**61.** A communication apparatus, comprising:
a transceiver and a processor, wherein the transceiver is configured to execute instructions for receiving and sending information; and when the instructions are run by the processor, the communication apparatus is enabled to perform the method according to any one of claims 1 to 15.

**62.** A communication apparatus, comprising:
a transceiver and a processor, wherein the transceiver is configured to execute instructions for receiving and sending information; and when the instructions are run by the processor, the communication apparatus is enabled to perform the method according to any one of claims 16 to 30.

**63.** A computer-readable storage medium, wherein
the computer-readable storage medium stores a computer program, and the program is performed by a processor to perform the method according to any one of claims 1 to 15.

**64.** A computer-readable storage medium, wherein
the computer-readable storage medium stores a computer program, and the program is performed by a processor to perform the method according to any one of claims 16 to 30.

**65.** A communication apparatus, comprising a memory and a processor, wherein the memory is configured to store instructions, the processor is configured to execute the instructions stored in the memory, and the instructions stored in the memory are executed to perform the method according to any one of claims 1 to 15.

**66.** A communication apparatus, comprising a memory and a processor, wherein the memory is configured to store instructions, the processor is configured to execute the instructions stored in the memory, and the instructions stored in the memory are executed to perform the method according to any one of claims 16 to 30.

**67.** A communication system, comprising the communication apparatus according to any one of claims 31 to 45 and the communication apparatus according to any one of claims 46 to 60.

**68.** A computer program, wherein when the computer program is run on a computer, the computer is enabled to execute the communication method according to any one of claims 1 to 15.

**69.** A computer program, wherein when the computer program is run on a computer, the computer is enabled to execute the communication method according to any one of claims 16 to 30.

FIG. 1

FIG. 2

Network device

Terminal device

S301: First indication information →

S302: Determine first capability information

← S303: First capability information

FIG. 3

First network
device

Second network
device

Unicast

Multicast broadcast
service

FIG. 4

```
┌─────────────────────┐                          ┌─────────────────────┐
│ First network device │                          │   Terminal device   │
└─────────────────────┘                          └─────────────────────┘
           │                                                 │
           │       S501: Capability query information        │
           │          and first indication information       │
           │ ──────────────────────────────────────────────▶ │
           │                                                 │
           │              ┌──────────────────────────────────────────────┐
           │              │ S502: Determine a type of a multicast broadcast│
           │              │ service capability based on the capability query│
           │              │ information and the first indication information│
           │              └──────────────────────────────────────────────┘
           │                                                 │
           │       S503: First capability information includes│
           │ ◀────── the multicast broadcast service capability│
           │                                                 │
           │                                                 │
```

FIG. 5

```
┌─────────────────────┐                    ┌─────────────────────┐
│ First network device│                    │   Terminal device   │
└─────────────────────┘                    └─────────────────────┘
           │                                          │
           │────── S500: Broadcast message ──────────▶│
           │                                          │
           │                                          │
           │── S501: Capability query information ───▶│
           │       and first indication information   │
           │                                          │
                        ┌──────────────────────────────────────────────┐
                        │ S502: Determine a type of a multicast broadcast│
                        │ service capability based on the capability query│
                        │ information and the first indication information │
                        └──────────────────────────────────────────────┘
           │                                          │
           │        S503: First capability information│
           │◀────── includes the multicast broadcast ─│
           │            service capability            │
           │                                          │
           │◀── S504: Interest indication information ─│
  ┌──────────────────────────────┐                    │
  │ S505: Determine a unicast resource               │
  │          configuration       │                    │
  └──────────────────────────────┘                    │
           │                                          │
           │──── S506: Unicast resource configuration ▶│
           │                                          │
```

FIG. 6

First network device

Terminal device

S701: First indication information

S702: Determine a type of a multicast broadcast service capability based on the first indication information

S703: First capability information includes the multicast broadcast service capability

FIG. 7

```
┌──────────────────┐                          ┌──────────────────┐
│ First network device │                      │  Terminal device  │
└──────────────────┘                          └──────────────────┘
         │                                              │
         │         S800: Broadcast message          ──►│
         │                                              │
         │      S801: First indication information  ──►│
         │                                              │
         │                            ┌─────────────────────────────────────────┐
         │                            │ S802: Determine a type of a multicast broadcast │
         │                            │            service capability            │
         │                            └─────────────────────────────────────────┘
         │                                              │
         │        S803: First capability information    │
         │◄──         includes the multicast broadcast  │
         │                  service capability          │
         │                                              │
         │◄──  S804: Interest indication information  ──│
         │                                              │
┌─────────────────────────────────┐                    │
│ S805: Determine a unicast resource │                  │
│            configuration          │                   │
└─────────────────────────────────┘                    │
         │                                              │
         │──  S806: Unicast resource configuration  ──►│
         │                                              │
```

FIG. 8

Antenna

Radio frequency circuit

101

Memory ⇔ Processor

102

Input/Output apparatus

FIG. 9

Data sending processor 112

| Channel encoder | Modulator | Symbol generation module |

111

Data receiving processor 113

| Channel decoder | Demodulator | Channel estimation module |

FIG. 10

Processing apparatus 120

Radio frequency apparatus

Modulation subsystem

Multimedia subsystem

Central processing subsystem

Peripheral subsystem

126
Memory

124
Interface

123
Processor

FIG. 11

FIG. 12

## INTERNATIONAL SEARCH REPORT

| International application No. |
| --- |
| **PCT/CN2020/106872** |

**A. CLASSIFICATION OF SUBJECT MATTER**

H04W 4/06(2009.01)i

According to International Patent Classification (IPC) or to both national classification and IPC

**B. FIELDS SEARCHED**

Minimum documentation searched (classification system followed by classification symbols)

H04W;H04Q

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 多播, 广播, 单播, 同时, 能力, 请求, MBMS, broadcast, multicast, unicast, at one time, at the same time, contemporary, simultaneous, +ability, request

**C. DOCUMENTS CONSIDERED TO BE RELEVANT**

| Category* | Citation of document, with indication, where appropriate, of the relevant passages | Relevant to claim No. |
| --- | --- | --- |
| X | WO 2014166071 A1 (HUAWEI TECHNOLOGIES CO., LTD.) 16 October 2014 (2014-10-16)<br>description, p. 26, last paragraph to p. 48, last paragraph | 1-69 |
| X | CN 103369468 A (MITSUBISHI ELECTRIC CORPORATION) 23 October 2013 (2013-10-23)<br>description paragraphs [0051]-[0115] | 1-69 |
| X | CN 104954997 A (MITSUBISHI ELECTRIC CORPORATION) 30 September 2015 (2015-09-30)<br>description paragraphs [0051]-[0115] | 1-69 |
| X | US 2012275369 A1 (QUALCOMM INC.) 01 November 2012 (2012-11-01)<br>description, paragraphs [0035]-[0119] | 1-69 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 April 2021** | **25 April 2021** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/106872**

| Patent document cited in search report | | | Publication date (day/month/year) | Patent family member(s) | | | Publication date (day/month/year) |
|---|---|---|---|---|---|---|---|
| WO | 2014166071 | A1 | 16 October 2014 | US | 2016021516 | A1 | 21 January 2016 |
| | | | | CN | 104247470 | A | 24 December 2014 |
| | | | | EP | 2978245 | A1 | 27 January 2016 |
| CN | 103369468 | A | 23 October 2013 | | None | | |
| CN | 104954997 | A | 30 September 2015 | WO | 2008018130 | A1 | 14 February 2008 |
| | | | | | IN200804748 | P4 | 13 March 2009 |
| | | | | KR | 20080095234 | A | 28 October 2008 |
| | | | | | IN201948005067 | A | 12 April 2019 |
| | | | | US | 2010061285 | A1 | 11 March 2010 |
| | | | | JP | 2013066249 | A | 11 April 2013 |
| | | | | EP | 3240341 | A2 | 01 November 2017 |
| | | | | CN | 101351976 | A | 21 January 2009 |
| | | | | EP | 2051408 | A1 | 22 April 2009 |
| | | | | | IN201402281 | P4 | 19 June 2015 |
| | | | | KR | 20110030710 | A | 23 March 2011 |
| | | | | KR | 20100087761 | A | 05 August 2010 |
| | | | | JP | 2011151858 | A | 04 August 2011 |
| | | | | US | 2014056201 | A1 | 27 February 2014 |
| | | | | JPWO | 2008018130 | A1 | 24 December 2009 |
| US | 2012275369 | A1 | 01 November 2012 | CN | 103636278 | A | 12 March 2014 |
| | | | | EP | 2702824 | A1 | 05 March 2014 |
| | | | | KR | 20140018358 | A | 12 February 2014 |
| | | | | JP | 2014514877 | A | 19 June 2014 |
| | | | | WO | 2012149300 | A1 | 01 November 2012 |
| | | | | IN | 201302056 | P3 | 03 October 2014 |

Form PCT/ISA/210 (patent family annex) (January 2015)